(19) Europäisches Patentamt
European Patent Office
Office européen des brevets

(11) **EP 2 943 833 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(51) Int Cl.:
***G02B 23/02*** *(2006.01)*   ***G02B 27/64*** *(2006.01)*
***H04N 5/232*** *(2006.01)*

(21) Anmeldenummer: **14701149.8**

(22) Anmeldetag: **08.01.2014**

(86) Internationale Anmeldenummer:
**PCT/EP2014/050200**

(87) Internationale Veröffentlichungsnummer:
**WO 2014/108426 (17.07.2014 Gazette 2014/29)**

(54) **OPTISCHES SYSTEM ZUR ABBILDUNG EINES OBJEKTS SOWIE VERFAHREN ZUM BETRIEB DES OPTISCHEN SYSTEMS**

OPTICAL SYSTEM FOR IMAGING AN OBJECT AND METHOD FOR OPERATING SAID OPTICAL SYSTEM

SYSTÈME OPTIQUE POUR FORMER UNE IMAGE D'UN OBJET ET PROCÉDÉ PERMETTANT DE FAIRE FONCTIONNER CE SYSTÈME OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2013 DE 102013200312**
**11.01.2013 US 201361751402 P**

(43) Veröffentlichungstag der Anmeldung:
**18.11.2015 Patentblatt 2015/47**

(73) Patentinhaber: **Carl Zeiss Sports Optics GmbH**
**35576 Wetzlar (DE)**

(72) Erfinder: **BACH, Christian**
**35418 Buseck (DE)**

(74) Vertreter: **Tongbhoyai, Martin**
**Freischem & Partner**
**Patentanwälte mbB**
**Salierring 47-53**
**50677 Köln (DE)**

(56) Entgegenhaltungen:
**EP-A2- 1 596 583     DE-C2- 3 933 255**
**US-A- 6 130 709**

**Beschreibung**

Die Erfindung betrifft ein optisches System zur Abbildung eines Objekts sowie ein Verfahren zum Betrieb des optischen Systems. Das optische System ist zur Abbildung eines Objekts ausgebildet, wobei das optische System ein Objektiv, eine Bildstabilisierungseinheit und eine Bildebene aufweist. Bei einem Ausführungsbeispiel ist beispielsweise das optische System zusätzlich mit einem Okular versehen.

Das oben bezeichnete optische System wird beispielsweise in einem Fernrohr oder einem Fernglas eingesetzt. Beispielsweise sind optische Systeme in Form von Ferngläsern bekannt, die zwei Gehäuse in Form von zwei Tuben aufweisen. In einem ersten Tubus ist eine erste Abbildungseinheit angeordnet, die eine erste optische Achse aufweist. In einem zweiten Tubus ist eine zweite Abbildungseinheit angeordnet, die eine zweite optische Achse aufweist. Darüber hinaus sind aus dem Stand der Technik Ferngläser bekannt, die ein erstes Gehäuse in Form eines ersten Tubus mit einer ersten optischen Achse und ein zweites Gehäuse in Form eines zweiten Tubus mit einer zweiten optischen Achse aufweisen. Das erste Gehäuse ist mit dem zweiten Gehäuse über eine Knickbrücke verbunden, wobei die Knickbrücke ein an dem ersten Gehäuse angeordnetes erstes Scharnierteil aufweist und wobei die Knickbrücke ein an dem zweiten Gehäuse angeordnetes zweites Scharnierteil aufweist. Die Knickbrücke weist eine Knickachse auf. Werden die beiden Gehäuse relativ zueinander um die Knickachse geschwenkt, verändert sich der Abstand der beiden Gehäuse zueinander.

Das durch das Fernrohr oder das Fernglas von einem Beobachter erfasste Bild wird oft verwackelt wahrgenommen, da Zitterbewegungen oder Drehbewegungen der Hände des Benutzers, aber auch Bewegungen des Untergrundes wiederum Bewegungen des optischen Systems verursachen. Um dieses zu umgehen, ist es bekannt, Bilder in einem optischen System zu stabilisieren. Bekannte Lösungen verwenden Stabilisierungseinrichtungen zur Stabilisierung des Bildes mittels einer mechanischen Einrichtung und/oder einer elektronischen Einrichtung.

Aus der DE 23 53 101 C3 ist ein optisches System in Form eines Fernrohrs bekannt, das ein Objektiv, eine Bildstabilisierungseinheit in Form eines Prismenumkehrsystems sowie ein Okular aufweist. Das Prismenumkehrsystem ist kardanisch in einem Gehäuse des Fernrohrs gelagert. Hierunter wird verstanden, dass das Prismenumkehrsystem derart in einem Gehäuse des Fernrohrs angeordnet ist, dass das Prismenumkehrsystem um zwei zueinander rechtwinklig angeordnete Achsen drehbar gelagert ist. Zur drehbaren Lagerung wird in der Regel eine Vorrichtung verwendet, die als Kardanik bezeichnet wird. Ein Gelenkpunkt des kardanisch im Gehäuse gelagerten Umkehrsystems ist mittig zwischen einer bildseitigen Hauptebene des Objektivs und einer objektseitigen Hauptebene des Okulars angeordnet. Das kardanisch gelagerte Prismenumkehrsystem wird aufgrund seiner Trägheit durch auftretende Drehbewegungen nicht bewegt. Es bleibt somit fest im Raum stehen. Auf diese Weise wird eine Bildverschlechterung, die aufgrund der Bewegung des Gehäuses entsteht, kompensiert.

Aus der DE 39 33 255 C2 ist ein binokulares Fernglas mit einer Bildstabilisierungseinheit bekannt, das ein Prismenumkehrsystem aufweist. Das Prismenumkehrsystem weist Porro-Prismen auf, die jeweils eine Kippachse aufweisen. Die Porro-Prismen sind um ihre jeweilige Kippachse schwenkbar ausgebildet. Zur Schwenkung der Porro-Prismen sind Motoren vorgesehen. Die Schwenkung erfolgt in Abhängigkeit einer Zitterbewegung, die ein Wackeln eines beobachteten Bildes verursacht.

Ferner ist aus der US 6,414,793 B1 ein weiteres binokulares Fernglas mit einer Bildstabilisierungseinheit bekannt. Aus der US 7,460,154 B2 ist eine Vorrichtung zur Kompensation von Vibrationen unter Verwendung einer Koordinatentransformation bekannt.

Wie oben genannt, bewegen bei einigen der bekannten optischen Systeme Antriebseinheiten (Aktuatoren) die Bildstabilisierungseinheit oder mindestens ein optisches Element der Bildstabilisierungseinheit. Diese Antriebseinheiten werden über Stellsignale gesteuert, die von einer Steuereinheit oder von mehreren Steuereinheiten bereitgestellt werden. Durch die Trägheit der Masse der Bildstabilisierungseinheit oder des optischen Elements der Bildstabilisierungseinheit kommt es dabei zu einer zeitlichen Verzögerung zwischen dem Initiieren der Bewegung durch das Stellsignal in den Antriebseinheiten und dem Ausführen der eigentlichen Bewegung der Bildstabilisierungseinheit oder des optischen Elements der Bildstabilisierungseinheit. Die Bildstabilisierung erfolgt demnach beispielsweise zu einer auftretenden Zitterbewegung etwas verzögert. Dieses kann die Qualität der Bildstabilisierung beeinflussen, wie nachfolgend erläutert wird.

Bei einer vereinfachten Betrachtungsweise kann die Zitterbewegung als Zusammensetzung von zahlreichen sinusförmigen Schwingungen unterschiedlicher Frequenzen betrachtet werden. Betrachtet man nun eine einzelne sinusförmige Schwingung einer bestimmten Frequenz aus dem Spektrum der zahlreichen Frequenzen, so führt die oben beschriebene zeitliche Verzögerung zu einer Verschiebung der Phase zwischen der Phase des Stellsignals und der Phase der Bewegung der Bildstabilisierungseinheit bzw. des optischen Elements der Bildstabilisierungseinheit. Mit anderen Worten ausgedrückt führt die zeitliche Verzögerung auch zu einer Verschiebung der Phase zwischen der zu stabilisierenden Zitterbewegung und der Bewegung der Bildstabilisierungseinheit bzw. des optischen Elements der Bildstabilisierungseinheit. Dies beeinflusst dann auch eine Bewegung der Abbildung eines Objekts in dem optischen System, beispielsweise einem Fernglas.

Die Verschiebung der Phase wird mit steigender Frequenz des Stellsignals größer. Bei sehr hohen Frequenzen

EP 2 943 833 B1

des Stellsignals ist die Verschiebung der Phase derart hoch, dass die Bewegung der Bildstabilisierungseinheit bzw. des optischen Elements der Bildstabilisierungseinheit derart verschoben auftritt, dass die Bewegung der Bildstabilisierungseinheit bzw. des optischen Elements der Bildstabilisierungseinheit nicht ausreicht, um die Zitterbewegung zu kompensieren. Die Zitterbewegung und die Bewegung der Abbildung aufgrund der Bildstabilisierung werden deutlich wahrgenommen.

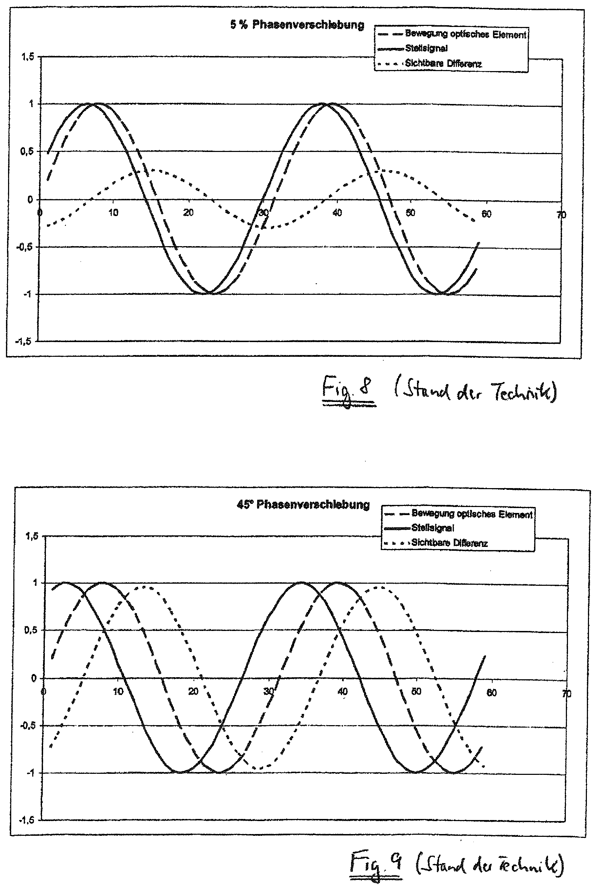

Das oben genannte lässt sich anhand der **Figuren 8 und 9** verdeutlichen. In den **Figuren 8 und 9** sind die Amplituden der Schwingungen der Bewegung der Bildstabilisierungseinheit bzw. des optischen Elements der Bildstabilisierungseinheit, des Stellsignals und der im optischen System sich aus diesen Schwingungen ergebenden sichtbaren Differenz gegenüber der Zeit aufgetragen. Bei einer Verzögerung des Einsetzens der Bewegung der Bildstabilisierungseinheit bzw. des optischen Elements der Bildstabilisierungseinheit um 5% der Periodendauer des Stellsignals wird eine Bewegung des Bildes in dem optischen System von ca. 30% der ursprünglichen Zitterbewegung erzeugt (**Figur 8**). Bei einer Verzögerung des Einsetzens der Bewegung der Bildstabilisierungseinheit bzw. des optischen Elements der Bildstabilisierungseinheit von 12,5% (entspricht 45°) der Periodendauer des Stellsignals ist die sichtbare Differenz, die sich ergibt, genauso groß wie das Stellsignal. Demnach wird sich bei einer Bildstabilisierung die Abbildung des Objekts (also das Bild) mit einer Amplitude bewegen, welche der Amplitude der Zitterbewegung entspricht. Dies ist für einen Betrachter deutlich sichtbar. Von einer Bildstabilisierung kann man dann nicht mehr sprechen.

Ein weiterer Nachteil der oben genannten Massenträgheit ist, dass bei steigender Frequenz die Amplitude der Bewegung der Bildstabilisierungseinheit bzw. des optischen Elements der Bildstabilisierungseinheit kleiner wird. Mit anderen Worten ausgedrückt, erfolgt auf eine schnelle Änderung des Stellsignals eine verzögerte Bewegung der Bildstabilisierungseinheit bzw. des optischen Elements der Bildstabilisierungseinheit mit zu geringen Bewegungen.

Es sind optische Einheiten bekannt, bei denen zur Vermeidung der obengenannten Probleme eine Überwachung der Position der Bildstabilisierungseinheit bzw. des optischen Elements der Bildstabilisierungseinheit und deren/dessen Regelung auf ein Stellsignal erfolgt. Hierzu wird eine PID-Regelung verwendet. Mittels der PID-Regelung werden die Amplituden der Bewegung der Bildstabilisierungseinheit oder des optischen Elements der Bildstabilisierungseinheit angepasst. Ferner ist es möglich, der Phasenverschiebung entgegenzuwirken. Allerdings sollte die PID-Regelung schnell regeln können. Um auf Abweichungen von einem Sollwert eines Stellsignals reagieren zu können, wird aufgrund des vorbeschriebenen Trägheitsproblems eine überdimensioniert starke Antriebseinheit verwendet. Eine derart ausgelegte Antriebseinheit verbraucht jedoch viel Energie und Bauraum. Ferner hat sich gezeigt, dass bei einer schnellen Regelung mittels der PID-Regelung Schwingungserscheinungen auftreten, die zum einen die Qualität der Bildstabilisierung reduzieren und zum anderen den Energieverbrauch ebenfalls ansteigen lassen.

Aus der US 6,130,709 A ist ein Bildbearbeitungsapparat für die Abbildung eines Objekts bekannt. Der Bildbearbeitungsapparat weist ein Objektiv und eine Bildstabilisierungseinheit in Form eines Prismas auf. Ferner ist ein Aktuator vorgesehen, der an der Bildstabilisierungseinheit angeordnet und zur Bewegung der Bildstabilisierungseinheit vorgesehen ist. Darüber hinaus ist eine Steuereinheit zur Ansteuerung der Antriebseinheit vorhanden. Zwischen der Steuereinheit und der Antriebseinheit ist ein Hochpassfilter geschaltet. Ferner wird bei dem bekannten Bildbearbeitungsapparat ein Stellsignal der Steuereinheit und ein Ausgangssignal des Hochpassfilters zur Erzeugung eines Additionssignals mit einer Additionseinheit addiert. Die Additionseinheit ist an der Antriebseinheit angeordnet, so dass das Additionssignal zur Ansteuerung der Antriebseinheit und Bewegung der Bildstabilisierungseinheit verwendet wird.

Ferner wird auf die EP 1 596 583 A2 sowie die DE 39 33 255 C2 als weiterer Stand der Technik hingewiesen.

Der Erfindung liegt daher die Aufgabe zugrunde, ein optisches System und ein Verfahren zum Betrieb des optischen Systems anzugeben, bei denen die Antriebseinheit derart auslegbar ist, dass sie energieeffizient arbeitet.

Erfindungsgemäß wird diese Aufgabe mit einem optischen System mit den Merkmalen des Anspruchs 1 gelöst. Ein Verfahren zum Betrieb des optischen Systems ist durch die Merkmale des Anspruchs 13 gegeben. Weitere Merkmale der Erfindung ergeben sich aus den weiteren Ansprüchen, aus der nachfolgenden Beschreibung und/oder aus den beigefügten Figuren.

Das erfindungsgemäße optische System ist zur Abbildung eines Objekts ausgebildet. Das optische System ist beispielsweise als ein binokulares Fernglas oder ein binokulares Fernrohr ausgebildet. Es wird aber explizit darauf hingewiesen, dass die Erfindung nicht auf ein derartiges optisches System eingeschränkt ist.

Das erfindungsgemäße optische System weist mindestens ein erstes Objektiv, mindestens eine erste Bildstabilisierungseinheit und mindestens eine erste Bildebene auf, wobei von dem ersten Objektiv in Richtung der ersten Bildebene gesehen zunächst das erste Objektiv, dann die erste Bildstabilisierungseinheit und dann die erste Bildebene entlang einer ersten optischen Achse angeordnet sind. Demnach sind die vorgenannten Einheiten in der folgenden Reihenfolge entlang der ersten optischen Achse angeordnet: erstes Objektiv - erste Bildstabilisierungseinheit - erste Bildebene.

Ferner weist das erfindungsgemäße optische System mindestens eine erste Antriebseinheit auf, die an der ersten Bildstabilisierungseinheit angeordnet und zur Bewegung der ersten Bildstabilisierungseinheit vorgesehen ist. Darüber hinaus weist das erfindungsgemäße optische System mindestens eine erste Steuereinheit zur Ansteuerung der ersten Antriebseinheit auf. Die Steuereinheit stellt dabei ein Steuersignal zur Verfügung. Das Steuersignal bestimmt die Bewegung der ersten Bildstabilisierungseinheit oder eines optischen Elements der Bildstabilisierungseinheit, beispielsweise die Richtung, die Amplitude und die Geschwindigkeit der Bewegung.

Bei dem erfindungsgemäßen optischen System ist es nun vorgesehen, dass zwischen der ersten Steuereinheit und der ersten Antriebseinheit ein erster Hochpassfilter geschaltet ist. Hierunter wird verstanden, dass der erste Hochpassfilter direkt oder indirekt über weitere Einheiten mit der ersten Steuereinheit und der ersten Antriebseinheit verbunden ist (diese Definition gilt nachfolgend analog auf für weitere Einheiten des optischen Systems). Die erste Steuereinheit weist ferner eine erste Ausgangsleitung auf, und der erste Hochpassfilter weist eine erste Filterausgangsleitung auf. Sowohl die erste Ausgangsleitung als auch die erste Filterausgangsleitung sind an einer ersten Additionseinheit angeordnet. Somit ist die erste Steuereinheit sowohl über eine Leitung mit dem ersten Hochpassfilter als auch über die erste Ausgangsleitung mit der ersten Additionseinheit verbunden. Die erste Steuereinheit liefert demnach ein erstes Steuersignal sowohl an den ersten Hochpassfilter als auch an die erste Additionseinheit. Die erste Additionseinheit ist an der ersten Antriebseinheit angeordnet.

Die Erfindung beruht auf der überraschenden Erkenntnis, dass die vorgenannte Aufgabe gelöst werden kann, wenn die Trägheit der ersten Bildstabilisierungseinheit oder eines optischen Elements der ersten Bildstabilisierungseinheit bereits im Stellsignal derart berücksichtigt wird, dass die beschriebene Verzögerung verschwindet oder zumindest auf eine vertretbare Höhe reduziert wird. Dies wird dadurch erzielt, dass das Ausgangssignal des ersten Hochpassfilters und das Stellsignal der ersten Steuereinheit zunächst addiert werden. Das hierdurch erzeugte erste Additionssignal wird nun in der ersten Antriebseinheit zur Ansteuerung der ersten Antriebseinheit und Bewegung der ersten Bildstabilisierungseinheit bzw. des optischen Elements der ersten Bildstabilisierungseinheit verwendet. Das Vorgenannte kann beispielsweise durch die folgende Gleichung beschrieben werden:

$$x' = x + \gamma \cdot HP(x) \quad \text{[Gleichung 1]}$$

wobei

x        das erste Steuersignal der ersten Steuereinheit (also das ursprüngliche Stellsignal) ist,
HP(x)   das Filtersignal des ersten Hochpassfilters in Abhängigkeit des ersten Steuersignals ist,
$\gamma$        ein konstanter Faktor ist, und wobei
x'       das erste Additionssignal der ersten Additionseinheit ist, welches der ersten Antriebseinheit als erstes Stellsignal zugeführt wird.

Das erfindungsgemäße optische System weist zwei Vorteile auf. Zum einen wird mit dem erfindungsgemäßen optischen System die Phase eines hochfrequenten ersten Steuersignals (beispielsweise im Bereich von 5 Hz bis 20 Hz, wobei die Erfindung auf diesen Bereich nicht eingeschränkt ist) zeitlich nach vorne verschoben. Dadurch wird die verzögerte Bewegung aufgrund der oben beschriebenen Trägheit kompensiert. Zum anderen wird die Amplitude des hochfrequenten ersten Steuersignals erhöht, wodurch die Reduktion der Amplitude aufgrund der Trägheit (siehe oben) kompensiert wird. Um dieses zu erreichen, wird vor Inbetriebnahme des optischen Systems beispielsweise experimentell eine Grenzfrequenz für den ersten Hochpassfilter und ein Faktor $\gamma$ derart ermittelt, dass die Verzögerung ausreichend gut kompensiert ist und die Amplitude der Bewegung sich nicht wesentlich reduziert. Beispielsweise wird 5% der Periodendauer der Schwingung als Grenze gewählt, um eine ausreichende Kompensierung zu erhalten.
Bei Verwendung des erfindungsgemäßen optischen Systems ist es möglich, auf eine Regelung, wie sie der Stand der Technik vorsieht, zu verzichten, so dass Energie eingespart wird. Aber selbst wenn man zusätzlich an dem erfindungsgemäßen optischen System eine Regelung vorsehen würde (beispielsweise eine PID-Regelung), dann würde diese Regelung durch die im Stellsignal kompensierte Massenträgheit der ersten Bildstabilisierungseinheit nur noch wesentlich kleinere Abweichungen (beispielsweise nur noch 30%) zu einer vorgebbaren Stellkurve ausgleichen als ohne Kompensation. Diese Abweichungen sind aber relativ klein, so dass nur geringe Bewegungen zum Ausgleich dieser Abweichungen notwendig sind. Die Einstellung von geringen Bewegungen erfordert aber nur einen geringen Energieverbrauch.

Bei dem erfindungsgemäßen optischen System ist es vorgesehen, dass die erste Steuereinheit mindestens einen ersten Tiefpassfilter und eine erste Integrationseinheit aufweist, welche dem ersten Tiefpassfilter nachgeschaltet ist. Mit anderen Worten ausgedrückt sind der erste Tiefpassfilter und die erste Integrationseinheit derart angeordnet, dass ein Signal zunächst den Tiefpassfilter und erst anschließend die erste Integrationseinheit durchläuft. Bei einer wiederum weiteren Ausführungsform des erfindungsgemäßen optischen Systems ist es zusätzlich oder alternativ vorgesehen, dass zwischen dem ersten Hochpassfilter und der ersten Antriebseinheit eine erste Dämpfungseinheit geschaltet ist. Hierunter wird verstanden, dass die erste Dämpfungseinheit direkt oder indirekt über weitere Einheiten mit dem ersten Hochpassfilter und der ersten Antriebseinheit verbunden ist.

Die vorbeschriebene Ausführungsform des erfindungsgemäßen optischen Systems beruht auf den nachfolgenden Überlegungen. Die Bewegungen des optischen Systems insbesondere aufgrund eines Handzitterns und/oder eines Schwenkens können durch eine Messung des Spektrums der Bewegungsfrequenzen dargestellt werden. Dieses gemessene Spektrum dient dann als Grundlage, um Stellsignale für die erste Bildstabilisierungseinheit zu erzeugen. Hierzu wird das gemessene Spektrum zunächst weiter ausgewertet und/oder gefiltert, wobei die Filterung beispielsweise Frequenzen von Bewegungen herausfiltert, die keiner Bildstabilisierung benötigen. Das gemessene Spektrum der Bewegungsfrequenzen liegt beispielsweise im Frequenzbereich von 0 Hz bis 20 Hz. Eine Bildstabilisierung lässt sich im Frequenzbereich von 0 Hz bis 15 Hz gut durchführen. Für Frequenzen über 15 Hz ist die Effizienz der Bildstabilisierung mit steigender Frequenz stark abnehmend. Die Überlegungen haben daher ergeben, dass aufgrund der fehlenden Effizienz bei Bewegungen mit hohen Frequenzen, beispielsweise größer als 20 Hz, keine Bildstabilisierung durchgeführt werden sollte. Mittels des ersten Tiefpassfilters ist es möglich, diese hohen Frequenzen, beispielsweise Frequenzen größer als 20 Hz, herauszufiltern und zu eliminieren. Das gemessene und nun gefilterte Spektrum umfasst dann nur noch Bewegungen mit Frequenzen im Bereich von 0 Hz bis 20 Hz. Das gefilterte Spektrum wird nun dem ersten Hochpassfilter zugeführt. Unter Verwendung des ersten Hochpassfilters und einer entsprechenden Software ist es nun möglich zu ermitteln, welche Art von Bewegungen im gefilterten Spektrum noch enthalten sind, um dann eine Bildstabilisierung in Abhängigkeit der erkannten Art durchzuführen. Dabei werden beispielsweise zwei Arten von Bewegungen unterschieden. Die erste Art von Bewegungen tritt bei einer Beobachtung von stationären Objekten auf (also Objekten, die sich nicht bewegen). Diese Bewegungen haben bei niedrigen Frequenzen (beispielsweise im Bereich von 0 Hz bis 2 Hz) geringe Amplituden, welche dann für Bewegungen mit Frequenzen bis 5 Hz ansteigen und dann für Bewegungen mit Frequenzen bis 8 Hz konstant verlaufen. Die zweite Art von Bewegungen tritt bei einem gewollten Schwenken des optischen Systems auf. Für Bewegungen mit niedrigen Frequenzen im Bereich von 0 Hz bis 2 Hz steigen die Amplituden stark an, wobei diese Amplituden durchaus höher sind als Amplituden von Bewegungen mit einer Frequenz von 5 Hz bis 10 Hz. Bei einem erkannten Schwenken (die Amplituden steigen bei Bewegungen mit Frequenzen von 0 Hz bis 2 Hz stark an) gibt es bei Filterung durch den ersten Hochpassfilters kaum noch niedrige Frequenzen mehr im Spektrum. Dies bewirkt, dass die verbliebenen höheren Frequenzen die Bewegung der ersten Bildstabilisierungseinheit steuern, und zwar derart, dass eine Bildstabilisierung immer weniger vorgenommen wird, je mehr das optische System absichtlich geschwenkt wird.

Ferner geht man bei der vorgenannten Ausführungsform der Erfindung von der Überlegung aus, dass eine gewollte Verschwenkung des erfindungsgemäßen optischen Systems insbesondere durch zwei Eigenschaften gekennzeichnet ist. Dies ist zum einen die bereits oben genannte niedrige Frequenz der gewollten Verschwenkung, aber zum anderen auch eine große Amplitude der gewollten Verschwenkung. Ungewollte Verschwenkungen, insbesondere Zitterbewegungen, weisen nämlich in der Regel eine viel kleinere Amplitude als gewollte Verschwenkungen des optischen Systems auf. Es wurde erkannt, dass man die Amplitude der gewollten Verschwenkung zusätzlich oder alternativ zur Bestimmung (Erkennung) der Art der Bewegung des optischen Systems mit heranziehen kann. Bei dem erfindungsgemäßen optischen System ist es vorgesehen, dass die erste Steuereinheit die erste Integrationseinheit aufweist, welche dem ersten Tiefpassfilter nachgeschaltet ist. Insbesondere ist es bei einem Ausführungsbeispiel des erfindungsgemäßen optischen Systems vorgesehen, dass die erste Integrationseinheit mindestens eine erste Eingangsleitung mit mindestens einem ersten Eingangssignal und mindestens eine erste Ausgangsleitung mit mindestens einem ersten Ausgangssignal aufweist, wobei das erste Ausgangssignal durch die folgende Gleichung bestimmt ist:

$$\Sigma(t_2) = \gamma(\Sigma(t_1)) \cdot \Sigma(t_1) + \alpha(t_1) \quad \text{[Gleichung 2]}$$

wobei

$\alpha(t_1)$      das erste Eingangssignal zu einem ersten Zeitpunkt $t_1$ ist,
$\Sigma\text{-}(t_1)$      das erste Ausgangssignal zu dem ersten Zeitpunkt $t_1$ ist,
$\gamma(\Sigma(t_1))$      eine Funktion zur Steuerung einer zeitlichen Führung des ersten Ausgangssignals auf den Wert Null ist, die abhängig vom ersten Ausgangssignal zum ersten Zeitpunkt $t_1$ ist, sowie
$\Sigma(t_2)$      das erste Ausgangssignal zu einem zweiten Zeitpunkt $t_2$ ist.

Es wurde überraschend erkannt, dass der Parameter $\gamma$ on nichtlinearer Art in Abhängigkeit der Amplitude der Verschwenkung des optischen Systems variiert werden kann. Die Integration mittels der ersten Integrationseinheit erfolgt dann nichtlinear derart, dass das erste Ausgangssignal der ersten Integrationseinheit zu einer geringer werdenden Stabilisierung durch die Bildstabilisierungseinheit führt, je niedriger die Geschwindigkeit der Verschwenkung des optischen Systems und je größer die Auslenkung (Amplitude) der Verschwenkung ist. Mit anderen Worten ausgedrückt wird auf diese Weise die Kompensation der Zitterbewegung (also die Bildstabilisierung bedingt durch die Zitterbewegung) "intrinsisch adaptiert", also innerhalb der Erkennungseinheit in Abhängigkeit der Amplitude der Verschwenkung des optischen Systems angepasst. Die Bildstabilisierung erfolgt in Abhängigkeit der (gewollten) Verschwenkung des optischen Systems, wobei während der absichtlichen Verschwenkung des optischen Systems (also während der Bewegung des optischen Systems) bei der Bildstabilisierung im Wesentlichen oder ausschließlich nur höherfrequente Bewegungen aus dem Bildzittern herausgefiltert werden. Niederfrequente Bewegungen im gemessenen Spektrum werden nicht aus dem Bildzittern herausgefiltert. Hierzu wird auch auf weiter oben verwiesen.

Bei einer weiteren Ausführungsform der Erfindung ist es bei dem erfindungsgemäßen optischen System zusätzlich oder alternativ vorgesehen, dass das optische System mindestens eine zweite Antriebseinheit aufweist, die an der ersten Bildstabilisierungseinheit angeordnet und zur Bewegung der ersten Bildstabilisierungseinheit vorgesehen ist. Die zweite Antriebseinheit kann derart mit der ersten Steuereinheit verbunden sein und zusammenwirken, wie die erste Antriebseinheit mit der ersten Steuereinheit.

Bei einer wiederum weiteren Ausführungsform des erfindungsgemäßen optischen Systems ist es zusätzlich oder alternativ vorgesehen, dass das optische System die folgenden Merkmale aufweist:

- mindestens ein zweites Objektiv,

- mindestens eine zweite Bildstabilisierungseinheit, und

- mindestens eine zweite Bildebene.

Es ist vorgesehen, dass von dem zweiten Objektiv in Richtung der zweiten Bildebene gesehen zunächst das zweite Objektiv, dann die zweite Bildstabilisierungseinheit und dann die zweite Bildebene entlang einer zweiten optischen Achse angeordnet sind. Somit sind die vorgenannten Einheiten in der folgenden Reihenfolge entlang der zweiten optischen Achse angeordnet: zweites Objektiv - zweite Bildstabilisierungseinheit - zweite Bildebene. Die vorgenannte Ausführungsform des optischen Systems ist beispielsweise als binokulares optisches System ausgebildet, insbesondere als binokulares Fernglas oder binokulares Fernrohr. Sie weist demnach zwei Abbildungseinheiten auf, nämlich eine erste Abbildungseinheit (mit dem ersten Objektiv, der ersten Bildstabilisierungseinheit und der ersten Bildebene) und eine zweite Abbildungseinheit (mit dem zweiten Objektiv, der zweiten Bildstabilisierungseinheit und der zweiten Bildebene).

Ferner ist bei dem erfindungsgemäßen optischen System eine dritte Antriebseinheit vorgesehen, die an der zweiten Bildstabilisierungseinheit angeordnet und zur Bewegung der zweiten Bildstabilisierungseinheit vorgesehen ist. Beispielsweise ist die dritte Antriebseinheit mit der ersten Steuereinheit derart verbunden und wirkt mit der ersten Steuereinheit derart zusammen, wie die erste Antriebseinheit.

Bei einem wiederum weiteren Ausführungsbeispiel des erfindungsgemäßen optischen Systems ist es zusätzlich oder alternativ vorgesehen, dass

- das optische System mindestens eine zweite Steuereinheit zur Ansteuerung der dritten Antriebseinheit aufweist,

- zwischen der zweiten Steuereinheit und der dritten Antriebseinheit ein zweiter Hochpassfilter geschaltet ist,

- die zweite Steuereinheit eine zweite Ausgangsleitung aufweist,

- der zweite Hochpassfilter eine zweite Filterausgangsleitung aufweist,

- sowohl die zweite Ausgangsleitung als auch die zweite Filterausgangsleitung an einer zweiten Additionseinheit angeordnet sind, und dass

- die zweite Additionseinheit an der dritten Antriebseinheit angeordnet ist.

Hinsichtlich der Vorteile und Wirkungen wird auf die Ausführungen hinsichtlich der ersten Steuereinheit und der ersten Antriebseinheit hingewiesen. Diese Ausführungen gelten analog für die zweite Steuereinheit und die dritte Antriebseinheit.

Bei einem weiteren Ausführungsbeispiel des erfindungsgemäßen optischen Systems ist es zusätzlich oder alternativ vorgesehen, dass die zweite Steuereinheit mindestens einen zweiten Tiefpassfilter aufweist, und dass die zweite Steuereinheit mindestens eine zweite Integrationseinheit aufweist, welche dem zweiten Tiefpassfilter nachgeschaltet ist. Ferner ist es zusätzlich oder alternativ vorgesehen, dass zwischen dem zweiten Hochpassfilter und der dritten Antriebseinheit eine zweite Dämpfungseinheit geschaltet ist. Hinsichtlich der Vorteile und Wirkungen wird auf die Ausführungen weiter oben zu dem ersten Tiefpassfilter hingewiesen. Diese Ausführungen gelten analog auch für den zweiten Tiefpassfilter.

6

Bei einem noch weiteren Ausführungsbeispiel des erfindungsgemäßen optischen Systems ist es zusätzlich oder alternativ vorgesehen, dass das optische System mindestens eine vierte Antriebseinheit aufweist, die an der zweiten Bildstabilisierungseinheit angeordnet und zur Bewegung der zweiten Bildstabilisierungseinheit vorgesehen ist. Die vierte Antriebseinheit kann derart mit der zweiten Steuereinheit verbunden sein und zusammenwirken, wie die dritte Antriebseinheit mit der zweiten Steuereinheit.

Bei einem wiederum weiteren Ausführungsbeispiel des erfindungsgemäßen optischen Systems ist es zusätzlich oder alternativ vorgesehen, dass das erste Objektiv, die erste Bildstabilisierungseinheit sowie die erste Bildebene in einem ersten Gehäuse angeordnet sind und dass das zweite Objektiv, die zweite Bildstabilisierungseinheit sowie die zweite Bildebene in einem zweiten Gehäuse angeordnet sind. Beispielsweise ist es zusätzlich vorgesehen, dass das erste Gehäuse mit dem zweiten Gehäuse über mindestens eine Knickbrücke verbunden ist, dass die Knickbrücke ein an dem ersten Gehäuse angeordnetes erstes Scharnierteil aufweist und dass die Knickbrücke ein an dem zweiten Gehäuse angeordnetes zweites Scharnierteil aufweist. Die Knickbrücke weist eine Knickachse auf. Werden die beiden Gehäuse relativ zueinander um die Knickachse geschwenkt, verändert sich der Abstand der beiden Gehäuse zueinander.

Bei einer wiederum weiteren Ausführungsform des erfindungsgemäßen optischen Systems ist an der ersten Steuereinheit mindestens ein erster Bewegungsdetektor zur Detektion einer Bewegung des optischen Systems angeordnet. Zusätzlich oder alternativ hierzu ist es vorgesehen, dass an der zweiten Steuereinheit mindestens ein zweiter Bewegungsdetektor zur Detektion einer Bewegung des optischen Systems angeordnet ist. Der erste Bewegungsdetektor und/oder der zweite Bewegungsdetektor kann/können beispielsweise als Winkelgeschwindigkeitsdetektor ausgebildet sein. Es wird aber explizit darauf hingewiesen, dass die Erfindung nicht auf einen Winkelgeschwindigkeitsdetektor eingeschränkt ist. Vielmehr kann bei der Erfindung jeder geeignete Bewegungsdetektor verwendet werden.

Die Erfindung betrifft auch ein Verfahren zum Betrieb eines optischen Systems, das mindestens eines der vorstehenden oder nachstehenden Merkmale oder eine Kombination aus mindestens zwei der vorstehenden oder nachstehenden Merkmale aufweist. Bei dem erfindungsgemäßen Verfahren wird ein erstes Steuersignal der ersten Steuereinheit einem ersten Hochpassfilter zugeführt. Ferner wird ein erstes Filtersignal durch den ersten Hochpassfilter erzeugt. Das erste Filtersignal und das erste Steuersignal werden addiert, wodurch ein erstes Stellsignal erzeugt wird. Das erste Stellsignal wird der ersten Antriebseinheit zur Bewegung der ersten Bildstabilisierungseinheit zugeführt.

Das Vorstehende gilt analog beispielsweise auch für die zweite Antriebseinheit, die dritte Antriebseinheit und die vierte Antriebseinheit.

Die Erfindung wird nun anhand von Ausführungsbeispielen mittels Figuren näher beschrieben. Dabei zeigen

Fig. 1A          eine erste schematische Darstellung eines optischen Systems in Form eines Fernglases mit einer Knickbrücke;

Fig. 1B          eine zweite schematische Darstellung des Fernglases nach Figur 1A;

Fig. 2A          eine schematische Darstellung eines ersten optischen Teilsystems;

Fig. 2B          eine dritte schematische Darstellung des Fernglases nach Figur 1A;

Fig. 2C          eine erste Schnittdarstellung des Fernglases entlang der Linie A-A gemäß Figur 2B;

Fig. 2D          eine zweite Schnittdarstellung des Fernglases entlang der Linie A-A gemäß Figur 2B;

Fig. 2E          eine vergrößerte Schnittdarstellung einer Bildstabilisierungseinheit des Fernglases gemäß den Figuren 2C und 2D;

Fig. 3A bis 3C    schematische Darstellungen eines Piezo-Biegeaktors;

Fig. 4          eine schematische Darstellung eines ersten Blockschaltbilds von Steuer- und Messeinheiten;

Fig. 5          eine weitere schematische Darstellung des ersten Blockschaltbilds von Steuer- und Messeinheiten gemäß der Figur 4;

Fig. 6          eine schematische Darstellung eines zweiten Blockschaltbilds von Steuer- und Messeinheiten;

Fig. 7          eine weitere schematische Darstellung des zweiten Blockschaltbilds von Steuer- und Messeinheiten gemäß der Figur 6;

Fig. 8            eine schematische Darstellung eines Schwingungsverlaufs im Stand der Technik; sowie

Fig. 9            eine weitere schematische Darstellung eines Schwingungsverlaufs im Stand der Technik.

Die Erfindung wird nachfolgend anhand eines optischen Systems in Form eines binokularen Fernglases 1 besprochen (nachfolgend nur Fernglas genannt). Es wird aber explizit darauf hingewiesen, dass die Erfindung nicht auf ein binokulares Fernglas eingeschränkt ist. Vielmehr ist die Erfindung für jedes optische System geeignet, beispielsweise auch bei einem Fernrohr.

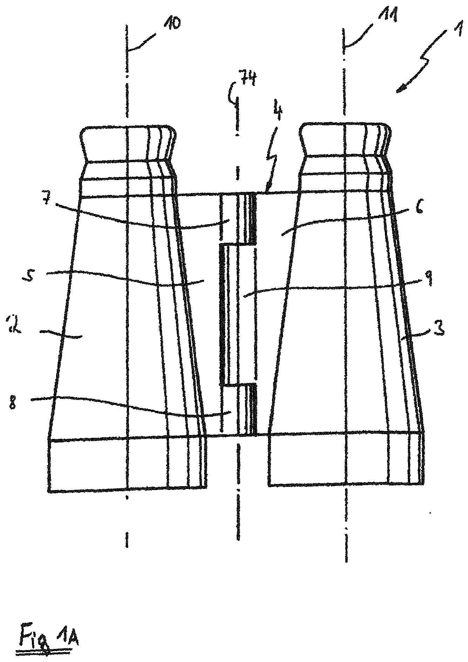

**Figur 1A** zeigt eine erste schematische Darstellung des Fernglases 1, welches ein tubusförmiges erstes Gehäuseteil 2 und ein tubusförmiges zweites Gehäuseteil 3 aufweist. Durch das erste Gehäuseteil 2 verläuft eine erste optische Achse 10. Hingegen verläuft durch das zweite Gehäuseteil 3 eine zweite optische Achse 11. Das erste Gehäuseteil 2 ist mit dem zweiten Gehäuseteil 3 über eine Knickbrücke 4 verbunden. Die Knickbrücke 4 weist ein erstes Scharnierteil 5 auf, welches an dem ersten Gehäuseteil 2 angeformt ist. Ferner weist die Knickbrücke 4 ein zweites Scharnierteil 6 auf, welches an dem zweiten Gehäuseteil 3 angeordnet ist. Das erste Scharnierteil 5 weist ein erstes Aufnahmeteil 7 und ein zweites Aufnahmeteil 8 auf, zwischen denen ein drittes Aufnahmeteil 9 des zweiten Scharnierteils 6 angeordnet ist. Durch das erste Aufnahmeteil 7, das zweite Aufnahmeteil 8 sowie das dritte Aufnahmeteil 9 verläuft ein Achsbolzen (nicht dargestellt), sodass die relative Position des ersten Gehäuseteils 2 und des zweiten Gehäuseteils 3 um eine Gelenkachse 74 zueinander eingestellt werden kann. Auf diese Weise ist es möglich, das erste Gehäuseteil 2 und das zweite Gehäuseteil 3 auf die Pupillendistanz eines Benutzers einzustellen, sodass zum einen das erste Gehäuseteil 2 an dem einen der beiden Augen des Benutzers angeordnet ist und so dass zum anderen das zweite Gehäuseteil 3 an dem anderen der beiden Augen des Benutzers angeordnet ist.

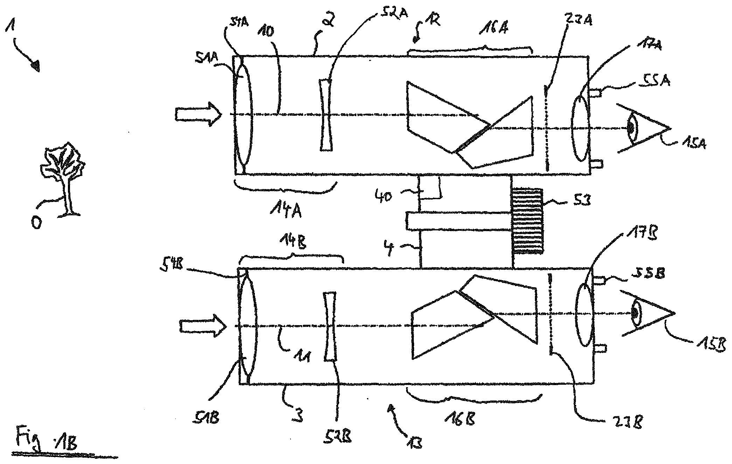

**Figur 1B** zeigt eine weitere Darstellung des Fernglases 1. Das erste Gehäuseteil 2 weist ein erstes optisches Teilsystem 12 auf. Das erste optische Teilsystem 12 ist mit einem ersten Objektiv 14A, mit einer als erstes Prismensystem ausgebildeten ersten Bildstabilisierungseinheit 16A und einem ersten Okular 17A versehen. An dem ersten Okular 17A kann ein erstes Auge 15A eines Benutzers zur Beobachtung eines Objekts O angeordnet werden. Die erste optische Achse 10 des ersten optischen Teilsystems 12 wird aufgrund des ersten Prismensystems 16A (erste Bildstabilisierungseinheit 16A) lateral etwas versetzt, so dass es zu einer stufigen Ausbildung der ersten optischen Achse 10 kommt.

Das erste Objektiv 14A besteht bei diesem Ausführungsbeispiel aus einer ersten Fronteinheit 51A und einer ersten Fokussiereinheit 52A. Weitere Ausführungsformen des ersten Objektivs 14A sehen eine unterschiedliche Anzahl an einzelnen Linsen oder aus Linsen bestehenden Kittgliedern vor. Zum Zwecke einer Fokussierung des durch Fernglas 1 betrachteten Objekts O kann entweder das erste Okular 17A oder die erste Fokussiereinheit 52A axial entlang der ersten optischen Achse 10 verschoben werden. Bei einer weiteren Ausführungsform wird die erste Fronteinheit 51A oder sogar das vollständige erste Objektiv 14A entlang der ersten optischen Achse 10 verschoben. Bei einer weiteren Ausführungsform werden die erste Fronteinheit 51A und die erste Fokussiereinheit 52A relativ zueinander verschoben.

Das zweite Gehäuseteil 3 weist ein zweites optisches Teilsystem 13 auf. Das zweite optische Teilsystem 13 ist mit einem zweiten Objektiv 14B, mit einer als Prismensystem ausgebildeten zweiten Bildstabilisierungseinheit 16B und mit einem zweiten Okular 17B versehen. An dem zweiten Okular 17B kann ein zweites Auge 15B des Benutzers zur Beobachtung des Objekts O angeordnet werden. Die zweite optische Achse 11 des zweiten optischen Teilsystems 13 wird aufgrund der zweiten Bildstabilisierungseinheit 16B (Prismensystem) lateral etwas versetzt, so dass es zu einer stufigen Ausbildung der zweiten optischen Achse 11 kommt.

Das zweite Objektiv 14B besteht bei diesem Ausführungsbeispiel aus einer zweiten Fronteinheit 51 B und einer zweiten Fokussiereinheit 52B. Weitere Ausführungsformen des zweiten Objektivs 14B sehen eine unterschiedliche Anzahl an einzelnen Linsen oder aus Linsen bestehenden Kittgliedern vor. Zum Zwecke einer Fokussierung des durch Fernglas 1 betrachteten Objekts O kann entweder das zweite Okular 17B oder die zweite Fokussiereinheit 52B axial entlang der zweiten optischen Achse 11 verschoben werden. Bei einer weiteren Ausführungsform wird die zweite Fronteinheit 51 B oder sogar das vollständige zweite Objektiv 14B entlang der zweiten optischen Achse 11 verschoben. Bei einer weiteren Ausführungsform werden die zweite Fronteinheit 51 B und die zweite Fokussiereinheit 52B relativ zueinander verschoben.

Bei beiden oben dargestellten optischen Teilsystemen 12,13 ist die Strahlrichtung des in die optischen Teilsysteme 12, 13 einfallenden Lichtstrahlen wie folgt: Objekt O - Objektiv 14A, 14B - Bildstabilisierungseinheit (Prismensystem) 16A, 16B - Okular 17A, 17B - Auge 15A, 15B.

Zum Fokussieren ist bei dem hier dargestellten Ausführungsbeispiel an der Knickbrücke 4 ein Drehknopf 53 angeordnet, mit dem die erste Fokussiereinheit 52A und die zweite Fokussiereinheit 52B gemeinsam entlang der beiden optischen Achsen 10 und 11 verschoben werden können. Bei einer weiteren Ausführungsform ist es vorgesehen, das erste Objektiv 14A und das zweite Objektiv 14B (oder zumindest Einheiten des ersten Objektivs 14A und des zweiten Objektivs 14B) relativ zueinander zu verstellen.

Sowohl das erste Objektiv 14A als auch das zweite Objektiv 14B erzeugen bei dem hier dargestellten Ausführungsbeispiel ein reales, relativ zum betrachteten Objekt O auf dem Kopf stehendes Bild in einer dem jeweiligen Objektiv 14A, 14B zugeordneten Bildebene. Das dem ersten Objektiv 14A zugeordnete erste Prismensystem 16A (erste Bildstabilisierungseinheit) sowie das dem zweiten Objektiv 14B zugeordnete zweite Prismensystem 16B (zweite Bildstabilisierungseinheit) werden zur Bildaufrichtung verwendet. Somit wird das auf dem Kopf stehende Bild wieder aufgerichtet und in einer neuen Bildebene, der linken Zwischenbildebene 23A oder der rechten Zwischenbildebene 23B, abgebildet. Das erste Prismensystem 16A (erste Bildstabilisierungseinheit) und das zweite Prismensystem 16B (zweite Bildstabilisierungseinheit) können als Abbe-König-Prismensystem, Schmidt-Pechan-Prismensystem, Uppendahl-Prismensystem, Porro-Prismensystem oder einer anderen Prismensystem-Variante aufgebaut sein.

In der linken Zwischenbildebene 23A ist beispielsweise eine das Sehfeld scharf begrenzende erste Feldblende angeordnet. Ferner kann beispielsweise in der rechten Zwischenbildebene 23B eine das Sehfeld scharf begrenzende zweite Feldblende angeordnet sein.

Das erste Okular 17A wird verwendet, um das Bild der linken Zwischenbildebene 23A in eine beliebige Entfernung, z.B. ins Unendliche oder in eine andere Entfernung, abzubilden. Ferner wird das zweite Okular 17B dazu verwendet, um das Bild der rechten Zwischenbildebene 23B in eine beliebige Entfernung, z.B. ins Unendliche oder in eine andere Entfernung, abzubilden.

Die erste Aperturblende 54A des ersten optischen Teilsystems 12 und die zweite Aperturblende 54B des zweiten optischen Teilsystems 13 können entweder durch eine Fassung eines optischen Elements des entsprechenden optischen Teilsystems 12, 13, in der Regel durch die Fassung der Linsen der ersten Fronteinheit 51A oder der zweiten Fronteinheit 51 B, oder durch eine separate Blende gebildet sein. Sie kann in Strahlrichtung durch das entsprechende optische Teilsystem 12 oder 13 in eine Ebene abgebildet werden, die in Strahlrichtung hinter dem entsprechenden Okular 17A oder 17B liegt und typischerweise 5 bis 25 mm Abstand zu diesem hat. Diese Ebene wird Ebene der Austrittspupille genannt.

Zum Schutz des Benutzers vor seitlich einfallendem Licht können an dem ersten Okular 17A eine ausziehbare, ausdrehbare oder umklappbare erste Augenmuschel 55A und an dem zweiten Okular 17B eine ausziehbare, ausdrehbare oder umklappbare zweite Augenmuschel 55B vorgesehen sein.

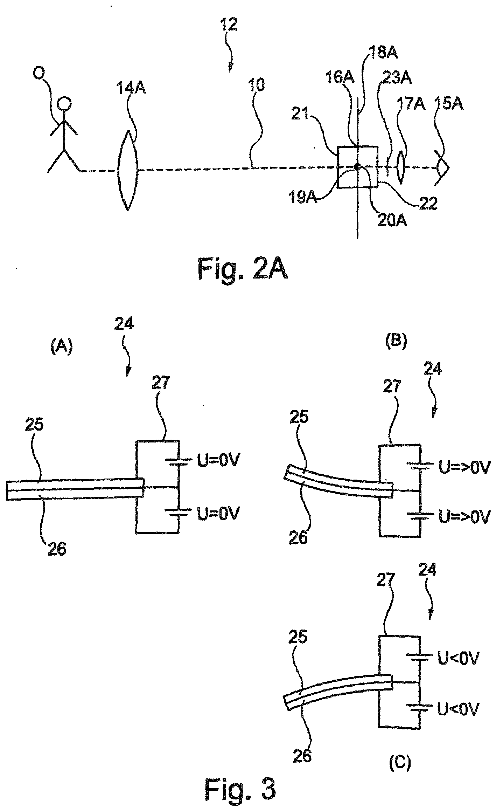

**Figur 2A** zeigt eine schematische Darstellung des ersten optischen Teilsystems 12, das in dem ersten Gehäuseteil 2 angeordnet ist. Das in dem zweiten Gehäuseteil 3 angeordnete zweite optische Teilsystem 13 weist einen identischen Aufbau wie das erste optische Teilsystem 12 auf. Somit gelten die nachfolgenden Ausführungen hinsichtlich des ersten optischen Teilsystems 12 auch für das zweite optische Teilsystem 13.

Wie aus **Figur 2A** ersichtlich, sind entlang der ersten optischen Achse 10 von dem Objekt O in Richtung des ersten Auges 15A des Benutzers das erste Objektiv 14A, die erste Bildstabilisierungseinheit 16A sowie das erste Okular 17A angeordnet. Bei dem hier dargestellten Ausführungsbeispiel ist die erste Bildstabilisierungseinheit 16A als Prismenumkehrsystem ausgebildet. Alternativ hierzu ist es bei einem weiteren Ausführungsbeispiel vorgesehen, dass die erste Bildstabilisierungseinheit 16A als Linsenumkehrsystem ausgebildet ist. Wie oben genannt, weist das zweite optische Teilsystem 13 einen identischen Aufbau wie das erste optische Teilsystem 12 auf. So ist hier das zweite Prismensystem als zweite Bildstabilisierungseinheit 16B ausgebildet.

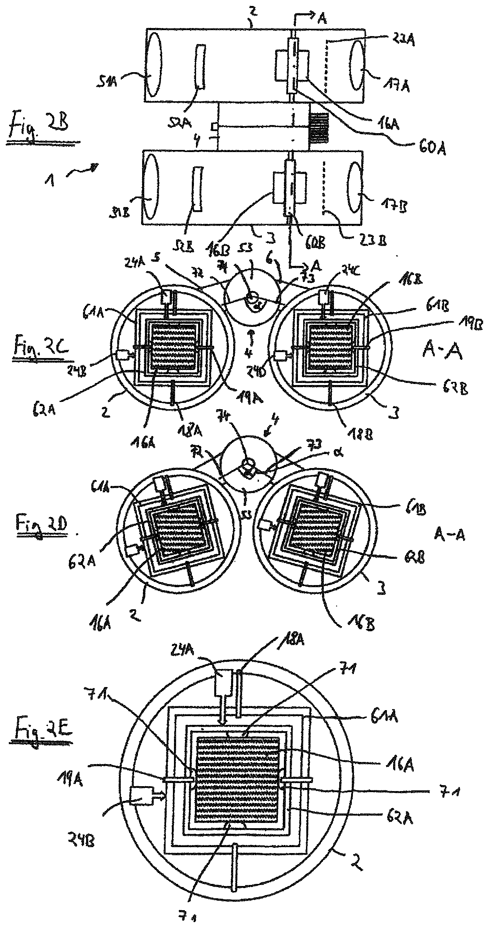

**Figur 2B** zeigt eine weitere schematische Darstellung des Fernglases 1. **Figur 2B** beruht auf der **Figur 1B.** Gleiche Bauteile sind mit gleichen Bezugszeichen versehen. **Figur 2B** zeigt nun auch die Bewegungsvorrichtungen für die erste Bildstabilisierungseinheit 16A und die zweite Bildstabilisierungseinheit 16B. Die erste Bildstabilisierungseinheit 16A ist in einer ersten Kardanik 60A angeordnet. Die zweite Bildstabilisierungseinheit 16B ist in einer zweiten Kardanik 60B angeordnet.

Die Anordnung der beiden Bildstabilisierungseinheiten 16A und 16B ist in der **Figur 2C** detaillierter dargestellt. Die erste Kardanik 60A weist eine erste äußere Aufhängung 61A auf, die über eine erste Achse 18A an dem ersten Gehäuseteil 2 angeordnet ist. Die erste äußere Aufhängung 61A ist drehbar um die erste Achse 18A angeordnet. Ferner weist die erste Kardanik 60A eine erste innere Aufhängung 62A auf, die über eine zweite Achse 19A an der ersten äußeren Aufhängung 61A drehbar angeordnet ist. Über eine erste Antriebseinheit 24A wird die erste innere Aufhängung 62A um die zweite Achse 19A gedreht. Ferner ist eine zweite Antriebseinheit 24B vorgesehen, mittels welcher die erste äußere Aufhängung 61A um die erste Achse 18A gedreht wird. **Figur 2E** zeigt das Vorgenannte in einer vergrößerten Darstellung. Die erste Bildstabilisierungseinheit 16A wird mittels Klemmhalter 71 an der ersten inneren Aufhängung 62A gehalten.

Die zweite Bildstabilisierungseinheit 16B ist an der zweiten Kardanik 60B angeordnet. Die zweite Kardanik 60B weist eine zweite äußere Aufhängung 61 B auf, die über eine dritte Achse 18B an dem zweiten Gehäuseteil 3 angeordnet ist. Die zweite äußere Aufhängung 61 B ist drehbar um die dritte Achse 18B angeordnet. Ferner weist die zweite Kardanik 60B eine zweite innere Aufhängung 62B auf, die über eine vierte Achse 19B an der zweiten äußeren Aufhängung 61B drehbar angeordnet ist. Über eine dritte Antriebseinheit 24C wird die zweite innere Aufhängung 62B um die vierte Achse 19B gedreht. Ferner ist eine vierte Antriebseinheit 24D vorgesehen, mittels welcher die zweite äußere Aufhängung 61 B um die dritte Achse 18B gedreht wird.

Wie oben erwähnt, zeigt **Figur 2A** das erste optische Teilsystem 12. Die erste Bildstabilisierungseinheit 16A ist mittels der ersten Kardanik 60A derart angeordnet, dass sie um zwei zueinander rechtwinklig angeordnete Achsen drehbar gelagert ist, nämlich um die erste Achse 18A und um die zweite Achse 19A, welche in die Blattebene hineinragt. Die erste Achse 18A und die zweite Achse 19A schneiden sich in einem ersten Schnittpunkt 20A. Der erste Schnittpunkt 20A ist unterschiedlich zu einem ersten optisch neutralen Punkt auf der ersten optischen Achse 10 angeordnet.

Die erste Bildstabilisierungseinheit 16A weist eine erste Eintrittsfläche 21 und eine erste Austrittsfläche 22 auf. Die erste Austrittsfläche 22 ist in einem Bereich von 1 mm bis 20 mm beabstandet zur linken Zwischenbildebene 23A angeordnet. Beispielsweise ist die erste Austrittsfläche 22 in einem Bereich von 2 mm bis 15 mm beabstandet zur linken Zwischenbildebene 23A angeordnet. Alternativ hierzu ist vorgesehen, dass die erste Austrittsfläche 22 in einem Bereich von 3 mm bis 12 mm beabstandet zur linken Zwischenbildebene 23A angeordnet ist.

Wie oben bereits erwähnt, gelten die vorstehend und nachstehend aufgeführten Anmerkungen hinsichtlich des ersten optischen Teilsystems 12 für das zweite optische Teilsystem 13 entsprechend.

Die **Figuren 3A - 3C** zeigen schematische Darstellungen einer Antriebseinheit 24 in Form eines Piezo-Biegeaktors, wobei unter einem Aktor ein Stellelement verstanden wird, das eine Kraft oder eine Bewegung erzeugen kann. In der Literatur wird ein solches Stellelement oft auch als Aktuator bezeichnet. Die erste Antriebseinheit 24A, die zweite Antriebseinheit 24B, die dritte Antriebseinheit 24C und die vierte Antriebseinheit 24D sind beispielsweise identisch zu der Antriebseinheit 24 aufgebaut.

Die **Figur 3A** zeigt eine schematische Darstellung der Antriebseinheit 24. Die Antriebseinheit 24 weist eine erste Piezokeramik 25 und eine zweite Piezokeramik 26 auf, die aufeinander angeordnet sind. Über eine Spannungseinheit 27 kann sowohl die erste Piezokeramik 25 als auch die zweite Piezokeramik 26 mit einer Spannung versorgt werden. Mit anderen Worten ausgedrückt wird an der ersten Piezokeramik 25 eine erste Spannung angelegt, und an der zweiten Piezokeramik 26 wird eine zweite Spannung angelegt. Die beiden vorgenannten Spannungen an der ersten Piezokeramik 25 und an der zweiten Piezokeramik 26 werden gegenpolig geschaltet, sodass beispielsweise zum einen sich die erste Piezokeramik 25 ausdehnt und zum anderen sich die zweite Piezokeramik 26 zusammenzieht. Hierdurch verbiegt sich die Gesamtanordnung der ersten Piezokeramik 25 und der zweiten Piezokeramik 26, wie in den **Figuren 3B und 3C** dargestellt. Diese Bewegungen werden nun genutzt, um die erste Bildstabilisierungseinheit 16A oder die zweite Bildstabilisierungseinheit 16B zu bewegen, wie nachfolgend näher erläutert wird.

Es wird explizit darauf hingewiesen, dass die Erfindung nicht auf die beschriebene Antriebseinheit 24 in Form eines Piezo-Biegeaktors eingeschränkt ist. Vielmehr können jegliche Arten von Antriebseinheiten verwendet werden, die für die Durchführung einer Bewegung der ersten Bildstabilisierungseinheit 16A oder der zweiten Bildstabilisierungseinheit 16B geeignet sind. Hierunter fallen auch Antriebseinheiten, die nicht auf Basis der Piezo-Technik arbeiten. Weitere geeignete Antriebseinheiten auf Basis der Piezo-Technik sind beispielsweise ein Piezo-Linearaktor, ein Piezo-Wanderwellenaktor oder ein Ultraschallmotor. Piezo-Aktoren sind besonders gut geeignet, da sie über eine große Selbsthemmung verfügen, sodass auf eine zusätzliche Arretierung der ersten Bildstabilisierungseinheit 16A oder der zweiten Bildstabilisierungseinheit 16B verzichtet werden kann. Ferner ist ihr Stromverbrauch sehr gering, sodass die Lebensdauer von Batterien, die zur Spannungsversorgung verwendet werden, größer ist.

Es ist vorgesehen, dass die Bewegung der ersten Bildstabilisierungseinheit 16A oder der zweiten Bildstabilisierungseinheit 16B und somit auch die Position der ersten Bildstabilisierungseinheit 16A oder der zweiten Bildstabilisierungseinheit 16B mit mindestens einem Sensor überwacht werden. Beispielsweise sind ein erster Sensor für eine Bewegung relativ zur ersten Achse 18A und ein zweiter Sensor für eine Bewegung relativ zur zweiten Achse 19A vorgesehen. Zusätzlich oder alternativ sind ein dritter Sensor für eine Bewegung relativ zur dritten Achse 18B und ein vierter Sensor für eine Bewegung relativ zur vierten Achse 19B vorgesehen. Beispielsweise wird als Sensor ein Hallsensor verwendet. Die Erfindung ist aber auf diese Art von Sensoren nicht eingeschränkt. Vielmehr kann jede geeignete Art von Sensor und auch jede geeignete Anzahl von Sensoren verwendet werden. Der vorgenannte Sensor dient der Verbesserung der Qualität der Bildstabilisierung. Es wird explizit darauf hingewiesen, dass die Erfindung auf die Verwendung eines derartigen Sensors nicht eingeschränkt ist. Vielmehr kann bei der Erfindung auch kein Sensor vorgesehen sein.

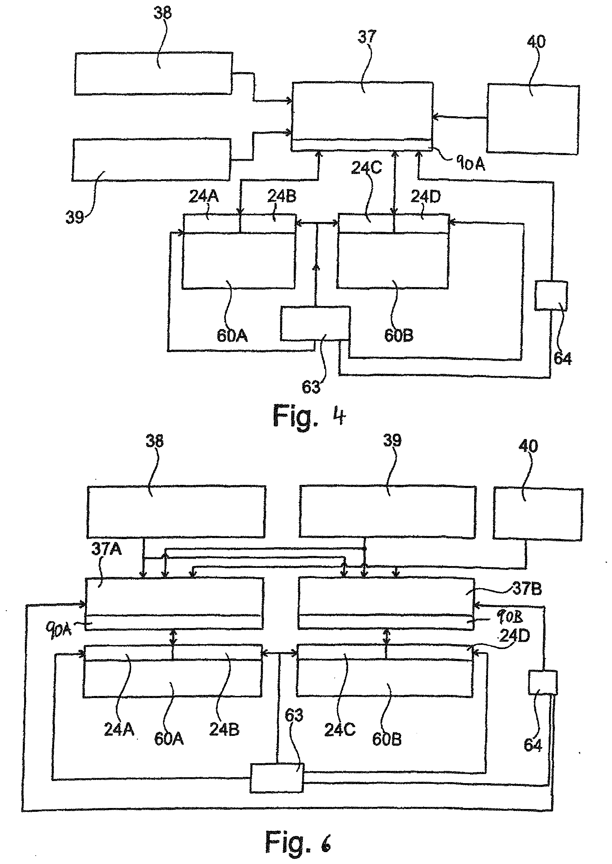

Figur 4 zeigt eine schematische Darstellung eines Blockschaltbildes von Steuer- und Messeinheiten für eine Bildstabilisierung im optischen System in Form des Fernglases 1. Die erste Kardanik 60A der ersten Bildstabilisierungseinheit 16A, die erste Antriebseinheit 24A und die zweite Antriebseinheit 24B, welche im ersten Gehäuseteil 2 angeordnet sind, zum einen sowie die zweite Kardanik 60B der zweiten Bildstabilisierungseinheit 16B, die dritte Antriebseinheit 24C und die vierte Antriebseinheit 24D, die im zweiten Gehäuseteil 3 angeordnet sind, zum anderen sind mit einer Steuer- und Kontrolleinheit 37 verbunden (beispielsweise ein Mikrocontroller). Die Steuer- und Kontrolleinheit 37 ist mit einer ersten Filtereinheit 90A verbunden, auf die weiter unten noch näher eingegangen wird. Ferner ist die Steuer- und Kontrolleinheit 37 wiederum mit einem ersten Winkelgeschwindigkeitsdetektor 38 und mit einem zweiten Winkelgeschwindigkeitsdetektor 39 verbunden. Der erste Winkelgeschwindigkeitsdetektor 38 dient der Detektion von Bewegungen des Fernglases 1 und ist im ersten Gehäuseteil 2 angeordnet. Auch der zweite Winkelgeschwindigkeitsdetektor 39 dient der Detektion von Bewegungen des Fernglases 1 und ist im ersten Gehäuseteil 2 angeordnet. Bei den vorgenannten Bewegungen handelt es sich beispielsweise um rotatorische und/oder translatorische Zitterbewegungen.

Wie aus der **Figur 4** auch ersichtlich ist, weist das hier dargestellte Ausführungsbeispiel eine Spannungsversorgungseinheit 63 auf, die mit der ersten Antriebseinheit 24A, mit der zweiten Antriebseinheit 24B, mit der dritten Antriebseinheit 24C und mit der vierten Antriebseinheit 24D zur Versorgung der vorgenannten Antriebseinheiten mit Spannung verbunden ist. Die Spannungsversorgungseinheit 63 ist beispielsweise als (wiederaufladbare) Batterie ausgebildet, deren noch vorhandene Spannung mit einer Spannungsmesseinheit 64 gemessen wird. Die Spannungsmesseinheit 64 ist mit der Steuer- und Kontrolleinheit 37 verbunden.

Darüber hinaus ist die Steuer- und Kontrolleinheit 37 mit einem Knickbrückensensor 40 verbunden. Die Verwendung des Knickbrückensensors 40 hat folgenden Hintergrund. Die relative Lage der Drehachsen (nämlich zum einen die erste Achse 18A sowie die zweite Achse 19A der ersten Bildstabilisierungseinheit 16A und zum anderen die dritte Achse 18B sowie die vierte Achse 19B der zweiten Bildstabilisierungseinheit 16B) ändert sich bei Einstellung des Augenabstandes über die Knickbrücke 4. Um eine genaue Einstellung der Drehbewegung der ersten Bildstabilisierungseinheit 16A relativ zu der zweiten Bildstabilisierungseinheit 16B zur Bildstabilisierung durch Positionieren der ersten Bildstabilisierungseinheit 16A und der zweiten Bildstabilisierungseinheit 16B erzielen zu können, ist es wünschenswert, die genaue relative Lage der jeweiligen Drehachsen zu kennen. Der Knickbrückensensor 40 ermittelt nun einen sogenannten Knickbrückenwinkel $\alpha$ zwischen einer ersten Scharnierteilachse 72 des ersten Scharnierteils 5 und einer zweiten Scharnierteilachse 73 des zweiten Scharnierteils 6, wobei die erste Scharnierteilachse 72 und die zweite Scharnierteilachse 73 einen gemeinsamen Schnittpunkt mit der Gelenkachse 74 aufweisen (vgl. **Figuren 2C und 2D**). Dabei ist es beispielsweise vorgesehen, mittels des Knickbrückensensors 40 den tatsächlichen Knickbrückenwinkel $\alpha$ zu bestimmen, was nachfolgend erläutert wird. Beispielsweise kann der Knickbrückenwinkel $\alpha$ in der **Figur 2C,** in welcher die erste Achse 18A und die dritte Achse 18B parallel zueinander angeordnet sind, bereits 175° betragen. In der **Figur 2D** ist nun eine Ausrichtung der ersten Scharnierteilachse 72 und der zweiten Scharnierteilachse 73 dargestellt, in welcher der Knickbrückenwinkel $\alpha$ beispielsweise 145° beträgt. Dann ist der tatsächliche Knickbrückenwinkel $\alpha$ hinsichtlich der ersten Achse 18A und der dritten Achse 18B die Differenz der beiden gemessenen Knickbrückenwinkel, also 30°. Der auf diese oder ähnliche Weise ermittelte Knickbrückenwinkel ermöglicht nun eine Transformation von Koordinaten eines ersten Koordinatensystems von Baueinheiten des ersten Gehäuseteils 2 in Koordinaten eines zweiten Koordinatensystems von Baueinheiten des zweiten Gehäuseteils 3.

Die Einstellung der Position (Drehposition) der ersten Bildstabilisierungseinheit 16A und der Position (Drehposition) der zweiten Bildstabilisierungseinheit 16B erfolgt beispielsweise wie nachfolgend geschildert. Mittels des ersten Winkelgeschwindigkeitsdetektors 38 und des zweiten Winkelgeschwindigkeitsdetektors 39 wird eine Winkelgeschwindigkeit aufgrund einer Bewegung des Fernglases 1 relativ zur beobachteten Umgebung detektiert. Der erste Winkelgeschwindigkeitsdetektor 38 und der zweite Winkelgeschwindigkeitsdetektor 39 liefern von der Bewegung abhängige Winkelgeschwindigkeitssignale. Mit den Winkelgeschwindigkeitssignalen werden in der Steuer- und Kontrolleinheit 37 Drehwinkel um die Drehachsen der ersten Bildstabilisierungseinheit 16A (beispielsweise die erste Achse 18A und die zweite Achse 19A) sowie Drehwinkel um die Drehachsen der zweiten Bildstabilisierungseinheit 16B (beispielsweise die dritte Achse 18B und die vierte Achse 19B) ermittelt. Die auf diese Weise ermittelten Drehwinkel werden nun in erste Korrekturwinkel umgerechnet, um welche die erste Bildstabilisierungseinheit 16A gedreht werden muss, um im Raum positioniert zu werden. Ferner wird mit den Drehwinkeln ein zweiter Korrekturwinkel berechnet, um welche die zweite Bildstabilisierungseinheit 16B gedreht werden muss, um im Raum zur Bildstabilisierung positioniert zu werden. Ferner sollte beachtet werden, dass der Schnittpunkt der Drehachsen mit dem optisch neutralen Punkt des Fernglases 1 nicht übereinstimmt. Dies bedeutet beispielsweise für das erste optische Teilsystem 12 in dem ersten Gehäuseteil 2, dass der erste Schnittpunkt 20A der ersten Achse 18A und der zweiten Achse 19A nicht mit dem optisch neutralen Punkt des Fernglases 1 auf der ersten optischen Achse 10 übereinstimmt. Daher sollte der ermittelte Drehwinkel mit einem vom Fernglas 1 abhängigen Faktor multipliziert werden, um den notwendigen Korrekturwinkel zu erhalten. Dabei sollte die relative Lage von Messachsen der beiden Winkelgeschwindigkeitsdetektoren 38 und 39 sowie der Drehachsen der ersten Bildstabilisierungseinheit 16A sowie der zweiten Bildstabilisierungseinheit 16B beachtet werden. Durch eine geeignete Transformation erhält man den entsprechenden Korrekturwinkel. Beispielsweise ist es vorgesehen, dass die Lage der Messachsen der beiden Winkelgeschwindigkeitsdetektoren 38 und 39 der Lage der ersten Achse 18A sowie der zweiten Achse 19A der ersten Bildstabilisierungseinheit 16A entspricht. Mittels des ermittelten Knickbrückenwinkels $\alpha$ können dann die Drehwinkel der ersten Bildstabilisierungseinheit 16A in Drehwinkel der zweiten Bildstabilisierungseinheit 16B transformiert werden.

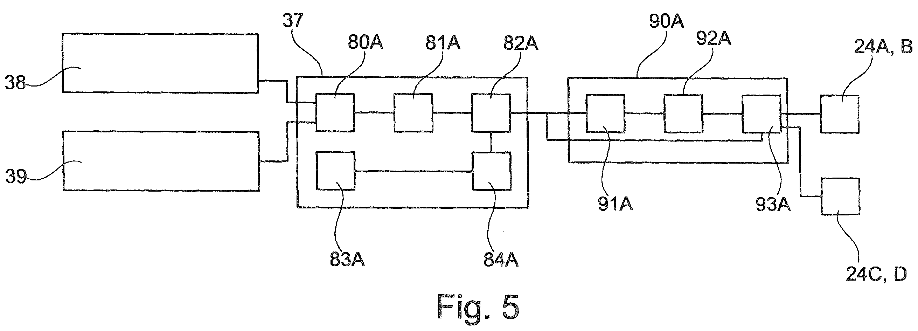

**Figur 5** zeigt ein weiteres Blockschaltbild, welches auf der **Figur 4** beruht. Gleiche Einheiten sind mit gleichen Bezugszeichen versehen. **Figur 5** verdeutlicht den Zusammenhang der Winkelgeschwindigkeitsdetektoren 38 und 39, der Steuer- und Kontrolleinheit 37 sowie der Antriebseinheiten 24A bis 24D. Wie oben bereits genannt, ist die Steuer- und Kontrolleinheit 37 mit dem ersten Winkelgeschwindigkeitsdetektor 38 und mit dem zweiten Winkelgeschwindigkeitsdetektor 39 verbunden. Die Steuer- und Kontrolleinheit 37 weist einen ersten Tiefpassfilter 80A auf, der direkt mit dem ersten Winkelgeschwindigkeitsdetektor 38 und dem zweiten Winkelgeschwindigkeitsdetektor 39 verbunden ist. Ein erster Analog-Digital-Wandler 81A ist dem ersten Tiefpassfilter 80A nachgeschaltet. Ferner ist eine erste Integrationseinheit 82A dem ersten Analog-Digital-Wandler 81A nachgeschaltet. Darüber hinaus weist die Steuer- und Kontrolleinheit 37 einen ersten Betriebsmodusschalter 83A und eine erste Parametereinheit 84A auf. Die erste Parametereinheit 84A ist mit der ersten Integrationseinheit 82A verbunden und ist zwischen den ersten Betriebsmodusschalter 83A und die erste Integrationseinheit 82A geschaltet.

Die Art des ersten Tiefpassfilters 80A ist beliebig wählbar. Bei einer besonderen Ausführungsform des Fernglases 1 ist es jedoch vorgesehen, eine Kombination aus einem elektrischen Tiefpassfilter, einem digitalen Tiefpassfilter und einem digitalen Shelving-Filter erster Ordnung zu verwenden, wobei die vorgenannten Filter in Reihe geschaltet sind. Bei dieser Kombination der Filter ist von Vorteil, dass eine Verzögerung des Eingangssignals der Kombination der vorgenannten Filter zum Ausgangssignal der Kombination der vorgenannten Filter von 45° erfolgt. Reine Tiefpassfilter weisen eine Verzögerung von 90° auf. Eine geringe Verzögerung ist von Vorteil, um eine Bildstabilisierung in "Echtzeit" zu erzielen.

Bei der hier dargestellten Ausführungsform des Fernglases 1 ist es nun vorgesehen, die Art einer Verschwenkung (also eine ungewollte Verschwenkung oder eine gewollte Verschwenkung) zu erkennen und eine Bildstabilisierung auf Basis der erkannten und festgestellten Art der Verschwenkung vorzunehmen.

Hierzu wird zunächst mittels des ersten Winkelgeschwindigkeitsdetektors 38 und des zweiten Winkelgeschwindigkeitsdetektors 39 eine Winkelgeschwindigkeit aufgrund einer Bewegung des Fernglases 1 relativ zur beobachteten Umgebung detektiert. Der erste Winkelgeschwindigkeitsdetektor 38 und der zweite Winkelgeschwindigkeitsdetektor 39 liefern von der Bewegung abhängige Winkelgeschwindigkeitssignale. Das Winkelgeschwindigkeitssignal des ersten Winkelgeschwindigkeitsdetektors 38 wird der Steuer- und Kontrolleinheit 37 zugeführt. Das Winkelgeschwindigkeitssignal des zweiten Winkelgeschwindigkeitsdetektors 39 wird ebenfalls der Steuer- und Kontrolleinheit 37 zugeführt. Genauer gesagt, werden das Winkelgeschwindigkeitssignal des ersten Winkelgeschwindigkeitsdetektors 38 und das Winkelgeschwindigkeitssignal des zweiten Winkelgeschwindigkeitsdetektors 39 dem ersten Tiefpassfilter 80A zugeführt.

Der erste Tiefpassfilter 80A stellt sicher, dass niedrige Frequenzen ungehindert den ersten Tiefpassfilter 80A passieren und der weiteren Signalverarbeitung zur Bildstabilisierung zugeführt werden können. Die hohen Frequenzen (größer als 20 Hz) werden durch den ersten Tiefpassfilter 80A herausgefiltert. Sie tragen daher zur Bildstabilisierung nicht bei.

Das gefilterte Signal des ersten Tiefpassfilters 80A wird über den ersten Analog-Digital-Wandler 81A an die erste Integrationseinheit 82A weitergeleitet. Das Ausgangssignal der ersten Integrationseinheit 82A ist durch die Gleichung 2 bestimmt, die nachfolgend nochmals wiedergegeben ist:

$$\Sigma(t_2) = \gamma(\Sigma(t_1)) \cdot \Sigma(t_1) + \alpha(t_1) \quad \text{[Gleichung 2]}$$

Hinsichtlich der Bedeutung der einzelnen Variablen der Gleichung 2 wird auf weiter oben verwiesen. Die Funktion $\gamma$ kann in der ersten Parametereinheit 84A durch Betätigen des ersten Betriebsmodusschalters 83A eingestellt werden. Durch eine bestimmte Wahl der Funktion $\gamma$ können die Eigenschaften der Bildstabilisierung eingestellt werden. Beispielsweise kann gewählt werden, wie lange eine Bildstabilisierung erfolgen soll oder ob eine Bildstabilisierung nur bei einer Verschwenkung ab einer Grenzamplitude erfolgen soll.

Bei einer Ausführungsform der Erfindung ist die Funktion $\gamma$ beispielsweise wie folgt gegeben:

$$\gamma(\Sigma) = \gamma_1 - \gamma_2 \Sigma \, signum(\Sigma) \quad \text{[Gleichung 3]}$$

$\gamma_1$ ist ein frei wählbarer Parameter, der bestimmt, wie schnell das Ausgangssignal der ersten Integrationseinheit 82A für kleine Amplituden der Verschwenkungen wieder auf Null abfällt. Bei Wahl eines kleinen Parameters $\gamma_1$ (beispielsweise 0,1) werden nur im Signal verbliebene höhere Frequenzen für die Bildstabilisierung herangezogen. Wenn der Parameter $\gamma_1$ nahe 1 liegt (beispielsweise 0,9), dann werden im Grunde alle im Signal verbliebenen Frequenzen für die Bildstabilisierung herangezogen.

$\gamma_2$ ist ebenfalls ein frei wählbarer Parameter, der bestimmt, wie stark der Einfluss der Amplitude der Verschwenkung des Fernglases 1 ist. Bei kleinen Werten von $\gamma_2$ (beispielsweise 0,1) werden bei großen Amplituden noch im Signal verbliebene höhere Frequenzen für die Bildstabilisierung herangezogen. Wenn der Parameter $\gamma_2$ groß ist (beispielsweise ca. 0,9), dann erfolgt dies bereits bei kleinen Amplituden.

Für die Funktion signum in der Gleichung 3 gilt: signum(x) = 1 für x größer oder gleich 0 und signum(x) = -1 für x kleiner als 0.

Das Ausgangssignal der ersten Integrationseinheit 82A wird nun an die erste Filtereinheit 90A weitergegeben, welche nachfolgend im Einzelnen beschrieben ist. Die erste Filtereinheit 90A weist einen ersten Hochpassfilter 91A, eine erste Dämpfungseinheit 92A sowie eine erste Additionseinheit 93A auf. Der erste Hochpassfilter 91A ist mit der ersten Integrationseinheit 82A verbunden. Die erste Dämpfungseinheit 92A ist zwischen dem ersten Hochpassfilter 91A und der ersten Additionseinheit 93A geschaltet. Ferner ist die erste Additionseinheit 93A mit der ersten Antriebseinheit 24A, mit der zweiten Antriebseinheit 24B, mit der dritten Antriebseinheit 24C und mit der vierten Antriebseinheit 24D verbunden.

Das Ausgangssignal des ersten Hochpassfilters 91A und das Ausgangssignal der ersten Integrationseinheit 82A werden in der ersten Additionseinheit 93A zunächst addiert. Das hierdurch erzeugte erste Additionssignal wird nun den Antriebseinheiten 24A bis 24D zur Ansteuerung der ersten Kardanik 60A und der zweiten Kardanik 60 B verwendet.

Wie oben bereits erwähnt, erfüllt die erste Filtereinheit 90A die Gleichung 1. Vor Inbetriebnahme des Fernglases 1 wird beispielsweise experimentell eine Grenzfrequenz für den ersten Hochpassfilter 91A und ein Faktor $\gamma$ für die erste Dämpfungseinheit 92A derart ermittelt, dass die Verzögerung ausreichend gut kompensiert ist und die Amplitude der Bewegung sich nicht wesentlich reduziert hat.

Es werden nun Drehwinkel um die Drehachsen der ersten Bildstabilisierungseinheit 16A und der zweiten Bildstabilisierungseinheit 16B ermittelt. Die ermittelten Drehwinkel werden nun in Korrekturwinkel umgerechnet, um welche die erste Bildstabilisierungseinheit 16A und/oder die zweite Bildstabilisierungseinheit 16B gedreht werden muss/müssen, um im Raum positioniert zu werden.

Die **Figur 6** ist ein Blockschaltbild einer weiteren Ausführungsform von Steuer- und Messeinheiten, das auf dem Ausführungsbeispiel der **Figur 4** basiert. Gleiche Baueinheiten sind daher mit gleichen Bezugszeichen versehen. Im Unterschied zur Ausführungsform gemäß der **Figur 4** weist die Ausführungsform gemäß der **Figur 6** zwei Steuer- und Kontrolleinheiten auf, nämlich eine erste Steuer- und Kontrolleinheit 37A und eine zweite Steuer- und Kontrolleinheit 37B. Die erste Steuer- und Kontrolleinheit 37A ist mit einer ersten Filtereinheit 90A, mit dem ersten Winkelgeschwindigkeitsdetektor 38, mit der ersten Kardanik 60A der ersten Bildstabilisierungseinheit 16A, mit der ersten Antriebseinheit 24A und mit der zweiten Antriebseinheit 24B verbunden. Die erste Steuer- und Kontrolleinheit 37A ist beispielsweise in dem ersten Gehäuseteil 2 angeordnet. Die zweite Steuer- und Kontrolleinheit 37B ist mit einer zweiten Filtereinheit 90B, mit dem zweiten Winkelgeschwindigkeitsdetektor 39, mit der zweiten Kardanik 60B der zweiten Bildstabilisierungseinheit 16B, mit der dritten Antriebseinheit 24C und mit der vierten Antriebseinheit 24D verbunden. Die zweite Steuer- und Kontrolleinheit 37B ist beispielsweise in dem zweiten Gehäuseteil 3 angeordnet. Der Knickbrückensensor 40 ist sowohl mit der ersten Steuer- und Kontrolleinheit 37A als auch mit der zweiten Steuer- und Kontrolleinheit 37B verbunden. Darüber hinaus ist der erste Winkelgeschwindigkeitsdetektor 38 mit der zweiten Steuer- und Kontrolleinheit 37B verbunden. Ferner ist der zweite Winkelgeschwindigkeitsdetektor 39 mit der ersten Steuer- und Kontrolleinheit 37A verbunden. Dieses Ausführungsbeispiel verwendet demnach jeweils eine separate Steuer- und Kontrolleinheit zum einen für das erste optische Teilsystem 12 in dem ersten Gehäuseteil 2 und zum anderen für das zweite optische Teilsystem 13 in dem zweiten Gehäuseteil 3, wobei allerdings die Winkelgeschwindigkeitsdetektoren 38, 39 zur Detektion von Bewegungen des Fernglases 1 gemeinsam genutzt werden. Die Spannungsmesseinheit 64 ist sowohl mit der ersten Steuer- und Kontrolleinheit 37A als auch mit der zweiten Steuer- und Kontrolleinheit 37B verbunden.

Das Ausführungsbeispiel der **Figur 6** funktioniert im Grunde wie das Ausführungsbeispiel der **Figur 4,** so dass zunächst auf die Anmerkungen zur **Figur 4** verwiesen wird. Allerdings weist das Ausführungsbeispiel der **Figur 6** ferner den nachfolgend erläuterten Unterschied zur **Figur 4** auf.

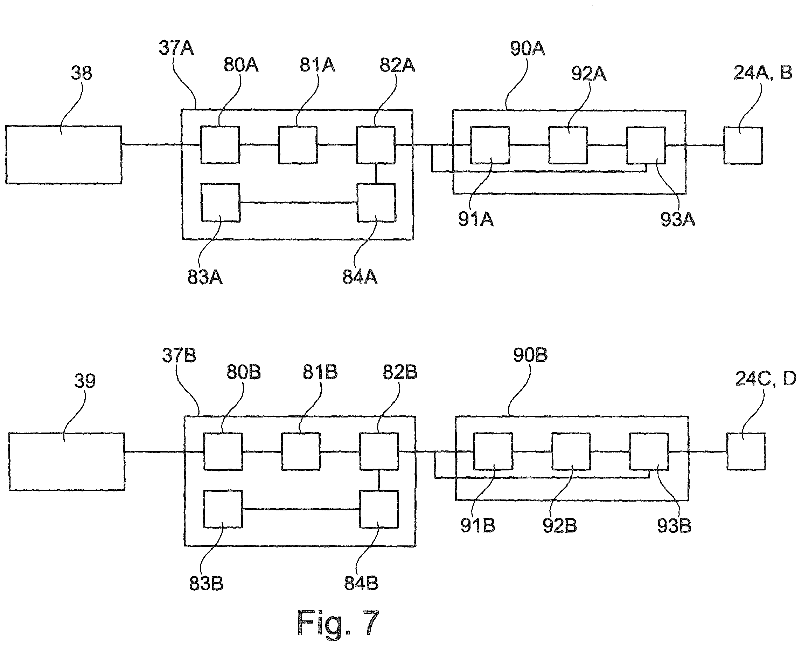

**Figur 7** zeigt ein weiteres Blockschaltbild, welches auf der **Figur 6** beruht. Gleiche Einheiten sind mit gleichen Bezugszeichen versehen. **Figur 7** verdeutlicht den Zusammenhang der Winkelgeschwindigkeitsdetektoren 38 und 39, der ersten Steuer- und Kontrolleinheit 37A und der zweiten Steuer- und Kontrolleinheit 37B sowie der Antriebseinheiten 24A bis 24D.

Wie oben bereits genannt, ist die erste Steuer- und Kontrolleinheit 37A mit dem ersten Winkelgeschwindigkeitsdetektor 38 verbunden. Sie weist ferner den Aufbau auf, welcher bereits oben zur **Figur 5** erläutert wurde.

Ebenfalls wurde bereits weiter oben genannt, dass die zweite Steuer- und Kontrolleinheit 37B mit dem zweiten Winkelgeschwindigkeitsdetektor 39 verbunden ist. Die zweite Steuer- und Kontrolleinheit 37B weist einen zweiten Tiefpassfilter 80B auf, der direkt mit dem zweiten Winkelgeschwindigkeitsdetektor 39 verbunden ist. Ein zweiter Analog-Digital-Wandler 81B ist dem zweiten Tiefpassfilter 80B nachgeschaltet. Ferner ist eine zweite Integrationseinheit 82B dem zweiten Analog-Digital-Wandler 81B nachgeschaltet. Darüber hinaus weist die zweite Steuer- und Kontrolleinheit 37B einen zweiten Betriebsmodusschalter 83B und eine zweite Parametereinheit 84B auf. Die zweite Parametereinheit 84B ist mit der zweiten Integrationseinheit 82B verbunden und ist zwischen den zweiten Betriebsmodusschalter 83B und die zweite Integrationseinheit 82B geschaltet.

Die Art der beiden Tiefpassfilter 80A und 80B ist beliebig wählbar. Bei einer besonderen Ausführungsform des Fernglases 1 ist es jedoch auch hier vorgesehen, eine Kombination aus einem elektrischen Tiefpassfilter, einem digitalen Tiefpassfilter und einem digitalen Shelving-Filter erster Ordnung zu verwenden, wobei die vorgenannten Filter in Reihe geschaltet sind.

Bei der hier dargestellten Ausführungsform des Fernglases 1 ist es nun vorgesehen, die Art einer Verschwenkung (also eine ungewollte Verschwenkung oder eine gewollte Verschwenkung) zu erkennen und eine Bildstabilisierung auf Basis der erkannten und festgestellten Art der Verschwenkung vorzunehmen. Hierzu wird zunächst mittels des ersten Winkelgeschwindigkeitsdetektors 38 und des zweiten Winkelgeschwindigkeitsdetektors 39 eine Winkelgeschwindigkeit aufgrund einer Bewegung des Fernglases 1 relativ zur beobachteten Umgebung detektiert. Der erste Winkelgeschwindigkeitsdetektor 38 und der zweite Winkelgeschwindigkeitsdetektor 39 liefern von der Bewegung abhängige Winkelgeschwindigkeitssignale. Das Winkelgeschwindigkeitssignal des ersten Winkelgeschwindigkeitsdetektors 38 wird der ersten Steuer- und Kontrolleinheit 37A zugeführt. Das Winkelgeschwindigkeitssignal des zweiten Winkelgeschwindigkeitsdetektors 39 wird der zweiten Steuer- und Kontrolleinheit 37B zugeführt. Genauer gesagt, wird das Winkelgeschwindigkeitssignal des ersten Winkelgeschwindigkeitsdetektors 38 dem ersten Tiefpassfilter 80A zugeführt, und das Winkelgeschwindigkeitssignal des zweiten Winkelgeschwindigkeitsdetektors 39 wird dem zweiten Tiefpassfilter 80B zugeführt.

Diese beiden Tiefpassfilter 80A und 80B stellen sicher, dass niedrige Frequenzen ungehindert die beiden Tiefpassfilter 80A und 80B passieren und der weiteren Signalverarbeitung zur Bildstabilisierung zugeführt werden können. Die hohen Frequenzen (größer als 20 Hz) werden durch die beiden Tiefpassfilter 80A und 80B herausgefiltert. Sie tragen daher zur Bildstabilisierung nicht bei.

Hinsichtlich der Funktionsweise der ersten Steuer- und Kontrolleinheit 37A und der zweiten Steuer- und Kontrolleinheit 37B wird auf die Ausführungen zur Steuer- und Kontrolleinheit 37 der **Figur 4** verwiesen. Diese gelten für die erste Steuer- und Kontrolleinheit 37A und die zweite Steuer- und Kontrolleinheit 37B analog.

Das Ausgangssignal der ersten Integrationseinheit 82A wird nun an die erste Filtereinheit 90A weitergegeben, welche weiter oben hinsichtlich der **Figur 5** näher beschrieben wurde. Allerdings unterscheidet sich die erste Filtereinheit 90A der **Figur 7** von der ersten Filtereinheit der **Figur 5** dadurch, dass die erste Additionseinheit 93A nur mit der ersten Antriebseinheit 24A und mit der zweiten Antriebseinheit 24B verbunden ist.

Das Ausgangssignal der zweiten Integrationseinheit 82B wird nun an die zweite Filtereinheit 90B weitergegeben. Die zweite Filtereinheit 90B weist einen zweiten Hochpassfilter 91 B, eine zweite Dämpfungseinheit 92B sowie eine zweite Additionseinheit 93B auf. Der zweite Hochpassfilter 91 B ist mit der zweiten Integrationseinheit 82B verbunden. Die zweite Dämpfungseinheit 92B ist zwischen dem zweiten Hochpassfilter 91 B und der zweiten Additionseinheit 93B geschaltet. Ferner ist die zweite Additionseinheit 93B mit der dritten Antriebseinheit 24C und mit der vierten Antriebseinheit 24D verbunden. Das Ausgangssignal des zweiten Hochpassfilters 91 B und das Ausgangssignal der zweiten Integrationseinheit 82B werden in der zweiten Additionseinheit 93B zunächst addiert. Das hierdurch erzeugte zweite Additionssignal wird nun der dritten Antriebseinheit 24C und der vierten Antriebseinheit 24D zur Ansteuerung der zweiten Kardanik 60B verwendet.

Die zweite Filtereinheit 90B erfüllt ebenfalls die Gleichung 1. Es wird auf die Ausführungen weiter oben verwiesen.

Es werden nun Drehwinkel um die Drehachsen der ersten Bildstabilisierungseinheit 16A und der zweiten Bildstabilisierungseinheit 16B ermittelt. Die ermittelten Drehwinkel werden nun in Korrekturwinkel umgerechnet, um welche die erste Bildstabilisierungseinheit 16A und/oder die zweite Bildstabilisierungseinheit 16B gedreht werden muss/müssen, um im Raum positioniert zu werden.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

**Bezugszeichenliste**

1      Fernglas
2      erstes Gehäuseteil
3      zweites Gehäuseteil
4      Knickbrücke
5      erstes Scharnierteil
6      zweites Scharnierteil
7      erstes Aufnahmeteil
8      zweites Aufnahmeteil
9      drittes Aufnahmeteil
10     erste optische Achse
11     zweite optische Achse
12     erstes optisches Teilsystem
13     zweites optisches Teilsystem
14A    erstes Objektiv
14B    zweites Objektiv

| | |
|---|---|
| 15A | erstes Auge |
| 15B | zweites Auge |
| 16A | erste Bildstabilisierungseinheit (erstes Prismensystem) |
| 16B | zweite Bildstabilisierungseinheit (zweites Prismensystem) |
| 17A | erstes Okular |
| 17B | zweites Okular |
| 18A | erste Achse |
| 18B | dritte Achse |
| 19A | zweite Achse |
| 19B | vierte Achse |
| 20A | erster Schnittpunkt |
| 21 | erste Eintrittsfläche |
| 22 | erste Austrittsfläche |
| 23A | linke Zwischenbildebene |
| 23B | rechte Zwischenbildebene |
| 24 | Antriebseinheit (Piezo-Biegeaktor) |
| 24A | erste Antriebseinheit |
| 24B | zweite Antriebseinheit |
| 24C | dritte Antriebseinheit |
| 24D | vierte Antriebseinheit |
| 25 | erste Piezokeramik |
| 26 | zweite Piezokeramik |
| 27 | Spannungseinheit |
| | |
| 37 | Steuer- und Kontrolleinheit |
| 37A | erste Steuer- und Kontrolleinheit |
| 37B | zweite Steuer- und Kontrolleinheit |
| 38 | erster Winkelgeschwindigkeitsdetektor |
| 39 | zweiter Winkelgeschwindigkeitsdetektor |
| 40 | Knickbrückensensor |
| | |
| 51A | erste Fronteinheit |
| 51B | zweite Fronteinheit |
| 52A | erste Fokussiereinheit |
| 52B | zweite Fokussiereinheit |
| 53 | Drehknopf |
| 54A | erste Aperturblende |
| 54B | zweite Aperturblende |
| 55A | erste Augenmuschel |
| 55B | zweite Augenmuschel |
| | |
| 60A | erste Kardanik |
| 60B | zweite Kardanik |
| 61A | erste äußere Aufhängung |
| 61B | zweite äußere Aufhängung |
| 62A | erste innere Aufhängung |
| 62B | zweite innere Aufhängung |
| 63 | Spannungsversorgungseinheit |
| 64 | Spannungsmesseinheit |
| | |
| 71 | Klemmhalter |
| 72 | erste Scharnierteilachse |
| 73 | zweite Scharnierteilachse |
| 74 | Gelenkachse |
| 80A | erster Tiefpassfilter |
| 80B | zweiter Tiefpassfilter |
| 81A | erster Analog-Digital-Wandler |
| 81B | zweiter Analog-Digital-Wandler |

82A     erste Integrationseinheit
82B     zweite Integrationseinheit
83A     erster Betriebsmodusschalter
83B     zweiter Betriebsmodusschalter
84A     erste Parametereinheit
84B     zweite Parametereinheit

90A     erste Filtereinheit
90B     zweite Filtereinheit
91A     erster Hochpassfilter
91B     zweiter Hochpassfilter
92A     erste Dämpfungseinheit
92B     zweite Dämpfungseinheit
93A     erste Additionseinheit
93B     zweite Additionseinheit

O     Objekt

**Patentansprüche**

1. Optisches System (1) zur Abbildung eines Objekts (O), mit

    - mindestens einem ersten Objektiv (14A),
    - mindestens einer ersten Bildstabilisierungseinheit (16A),
    - mindestens einer ersten Bildebene (23A),
    - mindestens einer ersten Antriebseinheit (24, 24A), die an der ersten Bildstabilisierungseinheit (16A) angeordnet und zur Bewegung der ersten Bildstabilisierungseinheit (16A) vorgesehen ist, und mit
    - mindestens einer ersten Steuereinheit (37, 37A) zur Ansteuerung der ersten Antriebseinheit (24, 24A),

    **wobei**

    - zwischen der ersten Steuereinheit (37, 37A) und der ersten Antriebseinheit (24, 24A) ein erster Hochpassfilter (91 A) geschaltet ist, so dass ein Signal der ersten Steuereinheit (37, 37A) an den ersten Hochpassfilter (91 A) weitergegeben wird,
    - die erste Steuereinheit (37, 37A) eine erste Ausgangsleitung aufweist,
    - der erste Hochpassfilter (91A) eine erste Filterausgangsleitung aufweist,
    - sowohl die erste Ausgangsleitung als auch die erste Filterausgangsleitung an einer ersten Additionseinheit (93A) angeordnet sind, so dass ein Stellsignal der ersten Steuereinheit (37, 37A) und ein Ausgangssignal des ersten Hochpassfilters (91A) zur Erzeugung eines ersten Additionssignals addiert werden, und wobei
    - die erste Additionseinheit (93A) an der ersten Antriebseinheit (24, 24A) angeordnet ist, so dass das erste Additionssignal zur Ansteuerung der ersten Antriebseinheit (24, 24A) und Bewegung der ersten Bildstabilisierungseinheit (16A) verwendet wird,

    **dadurch gekennzeichnet, dass**

    - von dem ersten Objektiv (14A) in Richtung der ersten Bildebene (23A) gesehen zunächst das erste Objektiv (14A), dann die erste Bildstabilisierungseinheit (16A) und dann die erste Bildebene (23A) entlang einer ersten optischen Achse (10) angeordnet sind,
    - die erste Steuereinheit (37, 37A) mindestens einen ersten Tiefpassfilter (80A) aufweist, und dass
    - die erste Steuereinheit (37, 37A) mindestens eine erste Integrationseinheit (82A) aufweist, welche dem ersten Tiefpassfilter (80A) nachgeschaltet ist.

2. Optisches System (1) nach Anspruch 1, **dadurch gekennzeichnet, dass** zwischen dem ersten Hochpassfilter (91A) und der ersten Antriebseinheit (24, 24A) eine erste Dämpfungseinheit (92A) geschaltet ist.

3. Optisches System (1) nach Anspruch 1 oder 2, **dadurch gekennzeichnet, dass** das optische System (1) mindestens eine zweite Antriebseinheit (24B) aufweist, die an der ersten Bildstabilisierungseinheit (16A) angeordnet und zur Bewegung der ersten Bildstabilisierungseinheit (16A) vorgesehen ist.

4. Optisches System (1) nach einem der vorangehenden Ansprüche, **dadurch gekennzeichnet, dass** das optische System die folgenden Merkmale aufweist:

- mindestens ein zweites Objektiv (14B),
- mindestens eine zweite Bildstabilisierungseinheit (16B),
- mindestens eine zweite Bildebene (23B), wobei von dem zweiten Objektiv (14B) in Richtung der zweiten Bildebene (23B) gesehen zunächst das zweite Objektiv (14B), dann die zweite Bildstabilisierungseinheit (16B) und dann die zweite Bildebene (23B) entlang einer zweiten optischen Achse (11) angeordnet sind, sowie
- mindestens eine dritte Antriebseinheit (24C), die an der zweiten Bildstabilisierungseinheit (16B) angeordnet und zur Bewegung der zweiten Bildstabilisierungseinheit (16B) vorgesehen ist.

5. Optisches System (1) nach Anspruch 4, **dadurch gekennzeichnet, dass**

- das optische System (1) mindestens eine zweite Steuereinheit (37B) zur Ansteuerung der dritten Antriebseinheit (24C) aufweist,
- zwischen der zweiten Steuereinheit (37B) und der dritten Antriebseinheit (24C) ein zweiter Hochpassfilter (91 B) geschaltet ist, so dass ein Signal der zweiten Steuereinheit (37B) an den zweiten Hochpassfilter (91 B) weitergegeben wird,
- die zweite Steuereinheit (37B) eine zweite Ausgangsleitung aufweist,
- der zweite Hochpassfilter (91 B) eine zweite Filterausgangsleitung aufweist,
- sowohl die zweite Ausgangsleitung als auch die zweite Filterausgangsleitung an einer zweiten Additionseinheit (93B) angeordnet sind, so dass ein Stellsignal der zweiten Steuereinheit (37B) und ein Ausgangssignal des zweiten Hochpassfilters (91 B) zur Erzeugung eines zweiten Additionssignals addiert werden, und dass
- die zweite Additionseinheit (93B) an der dritten Antriebseinheit (24C) angeordnet ist, so dass das zweite Additionssignal zur Ansteuerung der dritten Antriebseinheit (24C) und Bewegung der zweiten Bildstabilisierungseinheit (16B) verwendet wird.

6. Optisches System (1) nach Anspruch 5, **dadurch gekennzeichnet, dass**

- die zweite Steuereinheit (37B) mindestens einen zweiten Tiefpassfilter (80B) aufweist, und dass
- die zweite Steuereinheit (37B) mindestens eine zweite Integrationseinheit (83B) aufweist, welche dem zweiten Tiefpassfilter (80B) nachgeschaltet ist.

7. Optisches System (1) nach Anspruch 5 oder 6, **dadurch gekennzeichnet, dass** zwischen dem zweiten Hochpassfilter (91 B) und der dritten Antriebseinheit (24C) eine zweite Dämpfungseinheit (92B) geschaltet ist.

8. Optisches System (1) nach einem der Ansprüche 4 bis 7, **dadurch gekennzeichnet, dass** das optische System (1) mindestens eine vierte Antriebseinheit (24D) aufweist, die an der zweiten Bildstabilisierungseinheit (16B) angeordnet und zur Bewegung der zweiten Bildstabilisierungseinheit (16B) vorgesehen ist.

9. Optisches System (1) nach einem der Ansprüche 4 bis 8, **dadurch gekennzeichnet, dass**

- das erste Objektiv (14A), die erste Bildstabilisierungseinheit (16A) und die erste Bildebene (23A) in einem ersten Gehäuse (2) angeordnet sind, und dass
- das zweite Objektiv (14B), die zweite Bildstabilisierungseinheit (16B) und die zweite Bildebene (23B) in einem zweiten Gehäuse (3) angeordnet sind.

10. Optisches System (1) nach Anspruch 9, **dadurch gekennzeichnet, dass**

- das erste Gehäuse (2) mit dem zweiten Gehäuse (3) über mindestens eine Knickbrücke (4) verbunden ist,
- die Knickbrücke (4) ein an dem ersten Gehäuse (2) angeordnetes erstes Scharnierteil (5) aufweist, und dass
- die Knickbrücke (4) ein an dem zweiten Gehäuse (2) angeordnetes zweites Scharnierteil (6) aufweist.

11. Optisches System (1) nach einem der vorangehenden Ansprüche, **dadurch gekennzeichnet, dass** an der ersten Steuereinheit (37A) mindestens ein erster Bewegungsdetektor (38) zur Detektion einer Bewegung des optischen Systems (1) angeordnet ist.

**12.** Optisches System (1) nach einem der Ansprüche 5 bis 11, **dadurch gekennzeichnet, dass** an der zweiten Steuereinheit (37B) mindestens ein zweiter Bewegungsdetektor (39) zur Detektion einer Bewegung des optischen Systems (1) angeordnet ist.

**13.** Verfahren zum Betrieb eines optischen Systems (1) nach einem der vorangehenden Ansprüche, **dadurch gekennzeichnet, dass**

- ein erstes Steuersignal der ersten Steuereinheit (37, 37A) einem ersten Hochpassfilter (91A) zugeführt wird,
- ein erstes Filtersignal durch den ersten Hochpassfilter (91A) erzeugt wird,
- das erste Filtersignal und das erste Steuersignal addiert werden, wodurch ein erstes Stellsignal erzeugt wird, und dass
- das erste Stellsignal der ersten Antriebseinheit (24A) zur Bewegung der ersten Bildstabilisierungseinheit (16A) zugeführt wird.

**Claims**

**1.** Optical system (1) for imaging an object (O), comprising:

- at least one first objective (14A),
- at least one first image stabilizing unit (16A),
- at least one first image plane (23A),
- at least one first drive unit (24, 24A), which is arranged at the first image stabilizing unit (16A) and provided for moving the first image stabilizing unit (16A), and comprising
- at least one first control unit (37, 37A) for actuating the first drive unit (24, 24A),
  **wherein**
- a first high-pass filter (91A) is connected between the first control unit (37, 37A) and the first drive unit (24, 24A) such that a signal from the first control unit (37, 37A) is forwarded to the first high-pass filter (91A),
- the first control unit (37, 37A) has a first output line,
- the first high-pass filter (91A) has a first filter output line,
- both the first output line and the first filter output line are arranged at a first addition unit (93A) such that an actuation signal from the first control unit (37, 37A) and an output signal from the first high-pass filter (91A) are added to produce a first addition signal, and wherein
- the first addition unit (93A) is arranged at the first drive unit (24, 24A) in such a way that the first addition signal is used for actuating the first drive unit (24, 24A) and for moving the first image stabilizing unit (16A),
  **characterized in that,**
  as seen from the first objective (14A) in the direction of the first image plane (23A), the first objective (14A) is arranged first along a first optical axis (10), followed by the first image stabilizing unit (16A) and the first image plane (23A),
- the first control unit (37, 37A) has at least one first low-pass filter (80A), and **in that**
- the first control unit (37, 37A) has at least one first integration unit (82A), which is connected downstream of the first low-pass filter (80A).

**2.** Optical system (1) according to Claim 1, **characterized in that** a first damping unit (92A) is connected between the first high-pass filter (91A) and the first drive unit (24, 24A).

**3.** Optical system (1) according to Claim 1 or 2, **characterized in that** the optical system (1) has at least one second drive unit (24B), which is arranged at the first image stabilizing unit (16A) and provided for moving the first image stabilizing unit (16A).

**4.** Optical system (1) according to one of the preceding claims, **characterized in that** the optical system has the following features:

- at least one second objective (14B),
- at least one second image stabilizing unit (16B),
- at least one second image plane (23B), wherein, as seen from the second objective (14B) in the direction of the second image plane (23B), the second objective (14B) is arranged first along a second optical axis (11), followed by the second image stabilizing unit (16B) and the second image plane (23B), and

- at least one third drive unit (24C), which is arranged at the second image stabilizing unit (16B) and provided for moving the second image stabilizing unit (16B).

5. Optical system (1) according to Claim 4, **characterized in that**

- the optical system (1) has at least one second control unit (37B) for actuating the third drive unit (24C),
- a second high-pass filter (91B) is connected between the second control unit (37B) and the third drive unit (24C) such that a signal from the second control unit (37B) is forwarded to the second high-pass filter (91B),
- the second control unit (37B) has a second output line,
- the second high-pass filter (91B) has a second filter output line,
- both the second output line and the second filter output line are arranged at a second addition unit (93B) such that an actuation signal from the second control unit (37B) and an output signal from the second high-pass filter (91B) are added to produce a second addition signal, and **in that**
- the second addition unit (93B) is arranged at the third drive unit (24C) in such a way that the second addition signal is used for actuating the third drive unit (24C) and for moving the second image stabilizing unit (16B).

6. Optical system (1) according to Claim 5, **characterized in that**

- the second control unit (37B) has at least one second low-pass filter (80B) and **in that**
- the second control unit (37B) has at least one second integration unit (83B), which is connected downstream of the second low-pass filter (80B).

7. Optical system (1) according to Claim 5 or 6, **characterized in that** a second damping unit (92B) is connected between the second high-pass filter (91B) and the third drive unit (24C).

8. Optical system (1) according to one of Claims 4 to 7, **characterized in that** the optical system (1) has at least one fourth drive unit (24D), which is arranged at the second image stabilizing unit (16B) and provided for moving the second image stabilizing unit (16B).

9. Optical system (1) according to one of Claims 4 to 8, **characterized in that**

- the first objective (14A), the first image stabilizing unit (16A) and the first image plane (23A) are arranged in a first housing (2) and **in that**
- the second objective (14B), the second image stabilizing unit (16B) and the second image plane (23B) are arranged in a second housing (3).

10. Optical system (1) according to Claim 9, **characterized in that**

- the first housing (2) is connected to the second housing (3) by means of at least one folding bridge (4),
- the folding bridge (4) has a first hinge part (5) arranged at the first housing (2), and **in that**
- the folding bridge (4) has a second hinge part (6) arranged at the second housing (2).

11. Optical system (1) according to one of the preceding claims, **characterized in that** at least one first movement detector (38) for detecting a movement of the optical system (1) is arranged at the first control unit (37A).

12. Optical system (1) according to one of Claims 5 to 11, **characterized in that** at least one second movement detector (39) for detecting a movement of the optical system (1) is arranged at the second control unit (37B).

13. Method for operating an optical system (1) according to one of the preceding claims, **characterized in that**

- a first control signal of the first control unit (37, 37A) is fed to a first high-pass filter (91A),
- a first filter signal is generated by the first high-pass filter (91A),
- the first filter signal and the first control signal are added, as a result of which a first actuation signal is generated, and **in that**
- the first actuation signal is fed to the first drive unit (24A) for moving the first image stabilizing unit (16A).

**Revendications**

1. Système optique (1), destiné à reproduire un objet (O), avec

   - au moins un premier objectif (14A),
   - au moins une première unité de stabilisation d'image (16A),
   - au moins un premier plan d'image (23A),
   - au moins une première unité d'entraînement (24, 24A), qui est placée sur la première unité de stabilisation d'image (16A) et qui est prévue pour déplacer la première unité de stabilisation d'image (16A) et avec
   - au moins une première unité de commande (37, 37A) destinée à amorcer la première unité d'entraînement (24, 24A),
   - entre la première unité de commande (37, 37A) et la première unité d'entraînement (24, 24A) étant monté un filtre passe-haut (91A), de sorte qu'un signal de la première unité de commande (37, 37A) soit retransmis au filtre passe-haut (91A),
   - la première unité de commande (37, 37A) comportant une première ligne de sortie,
   - le premier filtre passe-haut (91A) comportant une première ligne de sortie de filtre,
   - aussi bien la première ligne de sortie que la première ligne de sortie de filtre étant placées sur une unité d'addition (93A), de sorte qu'un signal de réglage de la première unité de commande (37, 37A) et un signal de sortie du premier filtre passe-haut (91A) soient additionnés pour la création d'un premier signal additionnel et
   - la première unité d'addition (93A) étant placée sur la première unité d'entraînement (24, 24A), de sorte que le premier signal additionnel soit utilisé pour l'amorçage de la première unité d'entraînement (24, 24A) et pour le déplacement de la première unité de stabilisation d'image (16A),
   **caractérisé en ce que**
   - vus à partir du premier objectif (14A) dans la direction du premier plan d'image (23A), d'abord le premier objectif (14A), puis la première unité de stabilisation d'image (16A) et ensuite le premier plan d'image (23A) sont placés le long d'un premier axe (10) optique,
   - la première unité de commande (37, 37A) comporte au moins un premier filtre passe-haut (80A) et **en ce que**
   - la première unité de commande (37, 37A) comporte au moins une première unité d'intégration (82A), laquelle est montée en aval du premier filtre passe-bas (80A).

2. Système optique (1) selon la revendication 1, **caractérisé en ce qu'**entre le filtre passe-haut (91A) et la première unité d'entraînement (24, 24A) est montée une première unité d'amortissement (92A).

3. Système optique (1) selon la revendication 1 ou 2, **caractérisé en ce que** le système optique (1) comporte au moins une deuxième unité d'entraînement (24B), qui est placée sur la première unité de stabilisation d'image (16A) et qui est prévue pour déplacer la première unité de stabilisation d'image (16A).

4. Système optique (1) selon l'une quelconque des revendications précédentes, **caractérisé en ce que** le système optique présente les caractéristiques suivantes :

   - au moins un deuxième objectif (14B),
   - au moins une deuxième unité de stabilisation d'image (16B),
   - au moins un deuxième plan d'image (23B), vu à partir du deuxième objectif (14B) dans la direction du deuxième plan d'image (23B), d'abord le deuxième objectif (14B), puis la deuxième unité de stabilisation d'image (16B) et ensuite le deuxième plan d'image (23B) sont placés le long d'un deuxième axe (11) optique et
   - il est prévu au moins une troisième unité d'entraînement (24C), qui est placée sur la deuxième unité de stabilisation d'image (16B) et qui est prévue pour déplacer la deuxième unité de stabilisation d'image (16B).

5. Système optique (1) selon la revendication 4, **caractérisé en ce que**

   - le système optique (1) comporte au moins une deuxième unité de commande (37B) pour l'amorçage de la troisième unité d'entraînement (24C),
   - entre la deuxième unité de commande (37B) et la troisième unité d'entraînement (24C) est monté un deuxième filtre passe-haut (91B), de sorte qu'un signal de la deuxième unité de commande (37B) soit retransmis au deuxième filtre passe-haut (91B),
   - la deuxième unité de commande (37B) comporte une deuxième ligne de sortie,
   - le deuxième filtre passe-haut (91B) comporte une deuxième ligne de sortie de filtre,
   - aussi bien la deuxième ligne de sortie que la deuxième ligne de sortie de filtre sont placées sur une deuxième unité d'addition (93B), de sorte qu'un signal de réglage de la deuxième unité de commande (37B) et un signal de sortie du deuxième filtre passe-haut (91B) soient additionnés pour créer un deuxième signal additionnel et **en ce que**

- la deuxième unité d'addition (93B) est placée sur la troisième unité d'entraînement (24C), de sorte que le deuxième signal additionnel soit utilisé pour l'amorçage de la troisième unité d'entraînement (24C) et pour le déplacement de la deuxième unité de stabilisation d'image (16B).

6. Système optique (1) selon la revendication 5, **caractérisé en ce que**

- la deuxième unité de commande (37B) comporte au moins un deuxième filtre passe-bas (80B) et **en ce que**
- la deuxième unité de commande (37B) comporte au moins une deuxième unité d'intégration (83B), laquelle est montée en aval du deuxième filtre passe-bas (80B).

7. Système optique (1) selon la revendication 5 ou 6, **caractérisé en ce qu'**entre le deuxième filtre passe-haut (91B) et la troisième unité d'entraînement (24C) est montée une deuxième unité d'amortissement (92B).

8. Système optique (1) selon l'une quelconque des revendications 4 à 7, **caractérisé en ce que** le système optique (1) comporte au moins une quatrième unité d'entraînement (24D), qui est placée sur la deuxième unité de stabilisation d'image (16B) et qui est prévue pour déplacer la deuxième unité de stabilisation d'image (16B).

9. Système optique (1) selon l'une quelconque des revendications 4 à 8, **caractérisé en ce que**

- le premier objectif (14A), la première unité de stabilisation d'image (16A) et le premier plan d'image (23A) sont placés dans un premier boîtier (2) et **en ce que**
- le deuxième objectif (14B), la deuxième unité de stabilisation d'image (16B) et le deuxième plan d'image (23B) sont placés dans un deuxième boîtier (3).

10. Système optique (1) selon la revendication 9, **caractérisé en ce que**

- le premier boîtier (2) est assemblé avec le deuxième boîtier (3) par l'intermédiaire d'au moins un pont pliable (4),
- le pont pliable (4) comporte une pièce de charnière (5) placée sur le premier boîtier (2) et **en ce que**
- le pont pliable (4) comporte une deuxième pièce de charnière (6) placée sur le deuxième boîtier (2).

11. Système optique (1) selon l'une quelconque des revendications précédentes, **caractérisé en ce que** sur la première unité de commande (37A) est placé au moins un premier détecteur de mouvements (38) pour la détection d'un déplacement du système optique (1).

12. Système optique (1) selon l'une quelconque des revendications 5 à 11, **caractérisé en ce que** sur la deuxième unité de commande (37B) est placé au moins un deuxième détecteur de mouvements (39) pour la détection d'un déplacement du système optique (1).

13. Procédé destiné à faire fonctionner un système optique (1) selon l'une quelconque des revendications précédentes, **caractérisé en ce**

- **qu'**un premier signal de commande de la première unité de commande (37, 37A) est amené vers un premier filtre passe-haut (91A),
- un premier signal filtré est créé par le premier filtre passe-haut (91A),
- le premier signal filtré et le premier signal de commande sont additionnés, suite à quoi il est créé un premier signal de réglage et en ce que
- le premier signal de réglage de la première unité d'entraînement (24A) est amené pour le déplacement de la première unité de stabilisation d'image (16A).

Fig 1A

Fig 1B

EP 2 943 833 B1

Fig. 2A

Fig. 3

Fig. 2B

Fig. 2C

Fig. 2D

Fig. 2E

Fig. 4

Fig. 6

Fig. 5

EP 2 943 833 B1

Fig. 7

EP 2 943 833 B1

Fig. 8 (Stand der Technik)

Fig. 9 (Stand der Technik)

# EP 2 943 833 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2353101 C3
- DE 3933255 C2
- US 6414793 B1
- US 7460154 B2
- US 6130709 A
- EP 1596583 A2